# EUROPEAN PATENT APPLICATION

(11) **EP 4 726 907 A2**
(43) Date of publication of application: **15.04.2026**
(21) Application number: 26160687.5
(22) Date of filing: 19.07.2022
(51) Int. Cl.: H01M 50/538

(54) **ELECTRODE ASSEMBLY, BATTERY, AND BATTERY PACK AND VEHICLE INCLUDING SAME**

(30) Priority: 22.10.2021 KR 20210142196; 07.01.2022 KR 20220002970
(62) Divisional of application: 22883724.1
(71) Applicant: LG Energy Solution, Ltd., Seoul 07335 (KR)
(72) Inventor: LIM, Hae-Jin, 34122 Daejeon (KR); KONG, Jin-Hak, 34122 Daejeon (KR); LEE, Soon-O, 34122 Daejeon (KR); CHOI, Kyu-Hyun, 34122 Daejeon (KR); KIM, Do-Gyun, 34122 Daejeon (KR)
(74) Representative: Goddar, Heinz J.

(57) **Abstract**

Disclosed is an electrode assembly, a battery, and a battery pack and a vehicle including the same. At least one of the first electrode and the second electrode includes an uncoated portion at a long side end, a part of the uncoated portion is exposed to the outside of the separator along a longitudinal direction of the electrode assembly, at least a part of the uncoated portion is bent in a radial direction of the electrode assembly to form a bending surface, and the bending surface may include a region in which the number of overlapping layers of the uncoated portion is substantially kept constant as a criterion layer number along the radial direction The welding region of the current collecting plate welded to the bending surface may overlap with the region in which the number of overlapping layers of the uncoated portion is kept as the criterion layer number.

## Description

### TECHNICAL FIELD

The present disclosure relates to an electrode assembly, a battery, and a battery pack and a vehicle including the same.

The present application claims priority to Korean Patent Application No. 10-2021-0142196 filed on October 22, 2021 and Korean Patent Application No. 10-2022-0002970 filed on January 7, 2022 in the Republic of Korea, the disclosures of which are incorporated herein by reference.

### BACKGROUND ART

Secondary batteries that are easily applicable to various product groups, have electrical characteristics such as high energy density and are repeatedly chargeable and dischargeable are universally applied not only to portable devices but also to electric vehicles (EVs) or hybrid electric vehicles (HEVs) driven by an electric drive source.

These batteries are attracting attention as a new energy source to improve eco-friendliness and energy efficiency because they have the primary advantage that they can dramatically reduce the use of fossil fuels as well as the secondary advantage that no by-products are generated from the use of energy.

Batteries currently widely used in the art include lithium ion batteries, lithium polymer batteries, nickel cadmium batteries, nickel hydrogen batteries, nickel zinc batteries, and the like. Such a battery has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap plate of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 or a form factor 2170, resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collecting plate is welded to the uncoated portion to improve the current collecting efficiency.

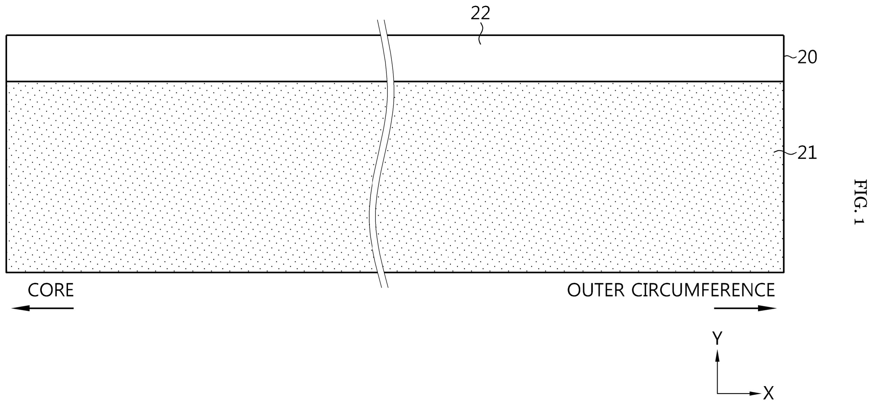

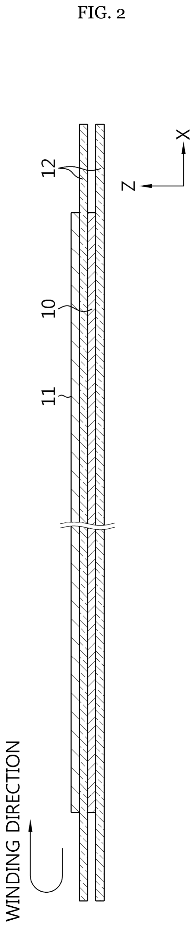

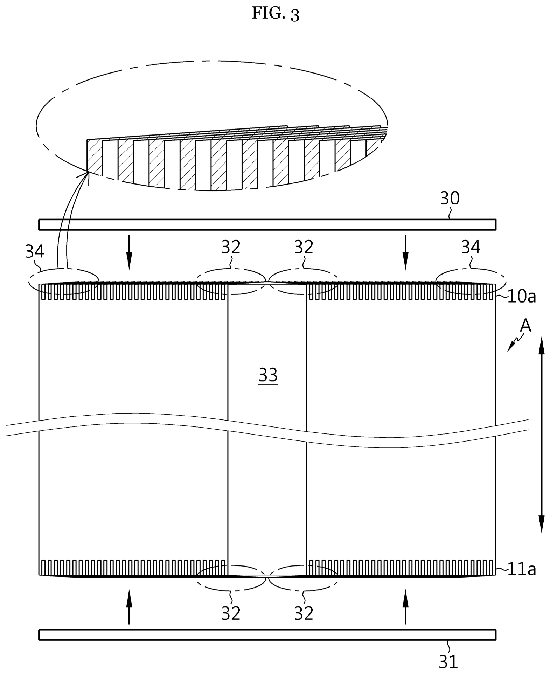

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collecting plate to a bending surface of an uncoated portion.

Referring to FIGS. 1 to 3, a positive electrode 10 and a negative electrode 11 have a structure in which a sheet-shaped current collector 20 is coated with an active material 21, and include an uncoated portion 22 at one long side end along the winding direction X.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions. The positions of the positive electrode 10 and the negative electrode 11 may be reversed from those shown in the drawings.

After the winding process, the uncoated portion 10a of the positive electrode 10 and the uncoated portion 11a of the negative electrode 11 are bent toward the core. After that, current collecting plates 30, 31 are welded and coupled to the uncoated portions 10a, 11a, respectively.

An electrode tab is not separately coupled to the positive electrode uncoated portion 10a and the negative electrode uncoated portion 11a, the current collecting plates 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

In the tab-less cylindrical battery, in order to improve the welding characteristics between the uncoated portions 10a, 11a and the current collecting plates 30, 31, a strong pressure must be applied to the welding points of the uncoated portions 10a, 11a to bend the uncoated portions 10a, 11a as flat as possible.

When the uncoated portions 10a, 11a are bent, all or a significant portion of the cavity 33 in the core of the electrode assembly A is blocked. In this case, it causes a problem in the electrolyte injection process. That is, the cavity 33 in the core of the electrode assembly A is used as a passage through which an electrolyte is injected. However, if the corresponding passage is blocked, electrolyte injection is difficult. In addition, while an electrolyte injector is being inserted into the cavity 33, the electrolyte injector may interfere with the uncoated portion 32 bent near the core, which may cause the uncoated portion 32 to tear.

In addition, the bent portions of the uncoated portions 10a, 11a to which the current collecting plates 30, 31 are welded should be overlapped in multiple layers and there should not be any empty spaces (gaps). In this way, sufficient welding strength may be obtained, and even with the latest technology such as laser welding, it is possible to prevent laser from penetrating into the electrode assembly A and melting the separator or the active material.

In order for the uncoated portions 10a, 11a to overlap with the same number of layers, the uncoated portions 10a, 11a at the corresponding position must be bent toward the core based on the position of each winding turn and cover the upper surface of the uncoated portion bent at the inner winding turn. In addition, assuming that d is the distance between the uncoated portions of neighboring winding turns in the radial direction and the bending length of the uncoated portions 10a, 11a of each winding turn is e, the bending length e must be d*n (n is a natural number greater than or equal to 2) or more. In this case, a region in which the uncoated portions 10a, 11a are overlapped in multiple layers with the same amount is generated. In addition, in order to sufficiently obtain a region in which the uncoated portions 10a, 11a are overlapped in the same number in the radial direction of the electrode assembly, the lengths of the uncoated portions 10a, 11a must be sufficiently long. However, since the radius of the electrode assembly included in a small-sized cylindrical battery is small, it is difficult to conceive of a concept for designing the uncoated portions 10a, 11a to have a sufficiently long bending length.

### DISCLOSURE

### TECHNICAL PROBLEM

The present disclosure is designed to solve the problems of the related art, and therefore the present disclosure is directed to providing an electrode assembly with an uncoated portion bending structure that may prevent damage to a separator or an active material layer even if a welding output is increased, by sufficiently securing a region in which uncoated portions are overlapped in a minimum layer number or more in a radial direction of the electrode assembly when the uncoated portions exposed at both ends of the electrode assembly are bent.

In addition to this, the present disclosure is directed to providing an electrode assembly with an uncoated portion bending structure in which the welding work may be easy and the welding may be performed uniformly, by sufficiently securing a region in which the uncoated portions are overlapped in substantially the same criterion layer number.

The present disclosure is also directed to providing an electrode assembly in which the electrolyte injection passage is not blocked even when the uncoated portion is bent.

The present disclosure is also directed to providing an electrode assembly in which the energy density is improved by reducing the dimension of the electrode assembly in the axis direction and the resistance is reduced by densely stacking the uncoated portions.

The present disclosure is also directed to providing a cylindrical battery including the electrode assembly having an improved structure, a battery pack including the battery, and a vehicle including the battery pack.

The technical objects to be solved by the present disclosure are not limited to the above, and other objects not mentioned herein will be clearly understood by those skilled in the art from the following disclosure.

### TECHNICAL SOLUTION

In one aspect of the present disclosure, there is provided an electrode assembly in which a first electrode, a second electrode, and a separator interposed therebetween are wound based on one axis to define a core and an outer circumference, and at least one of the first electrode and the second electrode includes an uncoated portion at a long side end, and at least a part of the uncoated portion is exposed to the outside of the separator along a longitudinal direction of the electrode assembly.

Preferably, the uncoated portion may be used as an electrode tab by itself. Also, at least a part of the uncoated portion may be bent in a radial direction of the electrode assembly to form a bending surface, and the bending surface may include a first region, in which the number of overlapping layers of the uncoated portion is equal to or greater than a minimum layer number, extending along the radial direction.

The number of overlapping layers of the uncoated portion may be defined as the number of uncoated portions that meet an imaginary straight line, when drawing the imaginary straight line parallel to the axis direction of the electrode assembly from a point on the bending surface.

The bending surface may be formed by bending the uncoated portion based on a predetermined bending point.

The minimum layer number may be 10.

The bending surface may include a second region in which the number of overlapping layers of the uncoated portion is kept substantially constant as a criterion layer number, the second region extending along the radial direction, and the second region may be included in the first region.

The criterion layer number may be a maximum value of the number of overlapping layers under the design condition of the uncoated portion. The criterion layer number may be greater than or equal to a minimum layer number. That is, the criterion layer number may be 10 or more.

The first region may include a first variable region in which the number of overlapping layers gradually increases in the radial direction and a second variable region in which the number of overlapping layers gradually decreases in the radial direction.

The second region may exist between the first variable region and the second variable region.

Hereinafter, for convenience of explanation, assuming that the total number of winding turns of the electrode including the uncoated portion is ni (when i is 1, it is a factor for the first electrode, and when i is 2, it is a factor for the second electrode), a value obtained by dividing the winding turn index k (a natural number of 1 to ni) at a kth winding turn position by the total number of winding turns ni is defined as a relative radial position Ri,k for the winding turn index k.

Here, k is a value obtained by counting winding turns appearing on the cross section when the electrode assembly is cut along the axis direction. The cross section may be defined as a winding turn counting cross section. In the cross section, the winding turn counting cross section may be a right cross section or a left cross section based on an axis direction. For example, if a total of 50 winding turns are shown on the right or left cross section, the winding turn index k of 1 to 50 may be assigned to each winding turn.

Meanwhile, the number of winding turns shown on the right or left cross section may be different depending on the cut position of the electrode assembly. Therefore, the cutting position for obtaining the cross section of the electrode assembly may be set such that the right and left cross sections are symmetrical with respect to the axis direction.

In the following description, the winding structure is a structure shown on the winding turn counting cross section, and the number of winding turns or the winding turn index is a value determined based on the winding structure shown on the winding turn counting cross section.

Preferably, a ratio of a length of a radial region of Ri,k satisfying the condition that the number of overlapping layers of the uncoated portion is 10 or more is at least 25% or more compared to the radius of the electrode assembly.

Preferably, at least a part of the uncoated portion is bent toward the core of the electrode assembly. The bent part of the uncoated portion is called a bent portion.

Preferably, the thickness of the first and second electrodes is 80 um to 250 um. In the winding structure of the first electrode and the second electrode, the interval between uncoated portions located in the kth winding turn and the k+1th winding turn adjacent in the radial direction is 200 um to 500 um.

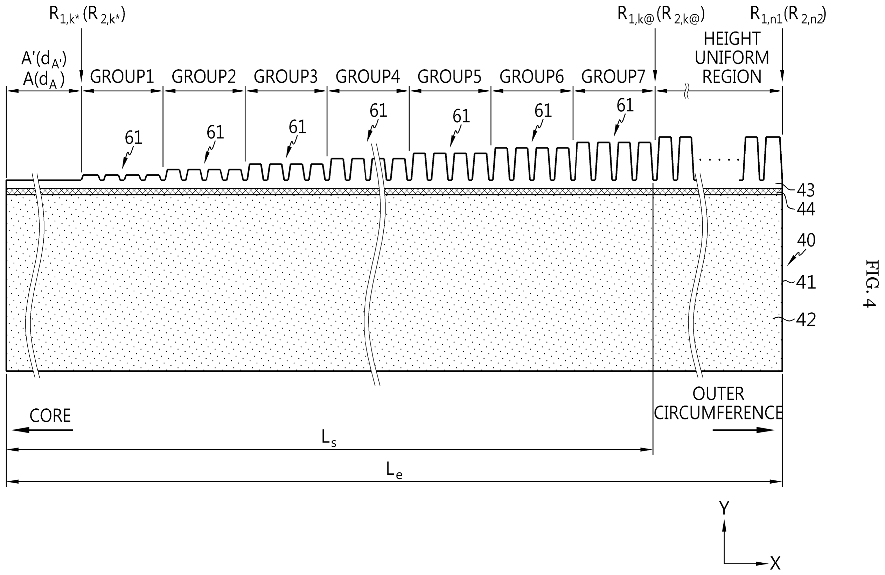

Preferably, in the winding structure of the first electrode, the height of the uncoated portion in a region (A in FIG. 4) from a relative radial position R1,1 of the first winding turn to a preset first relative radial position R1,k* may be smaller than the height of the uncoated portion in a region from a relative radial position R1,k*+1 of a k*+1th winding turn to a relative radial position R1,last located outer than the R1,k*+1.

R1,last is a relative radial position of an outermost winding turn where the uncoated portion bent toward the core in the first electrode is located.

In an example, the relative radial position R1,last may be 1.

In another example, the relative radial position R1,last may be R1,n1-p. R1,n1-p represents a relative radial position of a winding turn obtained by subtracting the turn number p from the outermost winding turn of the first electrode. The turn number p is the number of turns that do not include the bent uncoated portion based on the outermost winding turn and is a natural number of 1 or more. For example, if there is no bent uncoated portion at the n1th winding turn, which is an outermost winding turn of the first electrode, and the n1-1th winding turn, p is 2.

In addition, in the winding structure of the first electrode, the uncoated portion in the region from the relative radial position R1,1 of the first winding turn to the first relative radial position R1,k* of the preset k*th winding turn may have a lower height than the bending surface formed by overlapping the bent uncoated portions.

In addition, in the winding structure of the first electrode, the uncoated portion in a region from a relative radial position R1,1 of the first winding turn to a first relative radial position R1,k* of a preset k*th winding turn may not be bent toward the core of the electrode assembly.

Preferably, in the winding structure of the second electrode, the height of the uncoated portion in a region (A' in FIG. 4) from a relative radial position R2,1 of the first winding turn to a first relative radial position R2,k* of a preset k*th winding turn may be smaller than the height of the uncoated portion in a region from a relative radial position R2,k*+1 of a k*+1th winding turn to a relative radial position R2,last located outer than the R2,k*+1.

R2,last is a relative radial position of an outermost winding turn where the uncoated portion bent toward the core in the second electrode is located.

In an example, the relative radial position R2,last may be 1.

In another example, the relative radial position R2,last may be R2,n2-p. R2,n2-p represents a relative radial position of a winding turn obtained by subtracting the turn number p from the outermost winding turn of the second electrode. The turn number p is the number of turns that do not include the bent uncoated portion based on the outermost winding turn and is a natural number of 1 or more. For example, if there is no bent uncoated portion at the n2th winding turn, which is an outermost winding turn of the second electrode, and the n2-1th winding turn, p is 2.

In addition, in the winding structure of the second electrode, the uncoated portion in the region from the relative radial position R2,1 of the first winding turn to the first relative radial position R2,k* of the preset k*th winding turn may have a lower height than the bending surface formed by overlapping the bent uncoated portions.

In addition, in the winding structure of the second electrode, the uncoated portion in a region from a relative radial position R2,1 of the first winding turn to a first relative radial position R2,k* of a preset k*th winding turn may not be bent toward the core of the electrode assembly.

Preferably, the bent portion of the uncoated portion of the first electrode or the second electrode may be divided into a plurality of segments.

In one aspect, each of the plurality of segments may have a rectangular, trapezoidal, triangular, parallelogram, semicircular, or semielliptical shape.

Preferably, each of the plurality of segments is trapezoidal, and the plurality of segments may be configured such that a lower internal angle (θ) of the trapezoid increases individually or in groups from the core toward the outer circumference.

Preferably, in the winding structure of the first electrode, the uncoated portion in the region from the relative radial position R1,1 of the first winding turn to the first relative radial position R1,k* of the k*th winding turn may have a smaller height than the uncoated portion in the region of the relative radial position R1,k*+1 of the k*+1th winding turn to the relative radial position R1,last located outer than the R1,k*+1, and may not be bent toward the core.

R1,last represents the relative radial position with respect to the outermost winding turn index where the uncoated portion bent toward the core in the first electrode is located.

In one example, the relative radial position Ri,last may be 1.

In another example, the relative radial position R1,last may be R1,n1-p. R1,n1-p represents the relative radial position of the winding turn obtained by subtracting the turn number p from the outermost winding turn of the first electrode. The turn number p is the number of turns that do not include an uncoated portion that is bent based on the outermost winding turn, and is a natural number of 1 or more. For example, if there is no bent uncoated portion in the n1th winding turn, which is the outermost winding turn of the first electrode, and the n1-1th winding turn, p is 2.

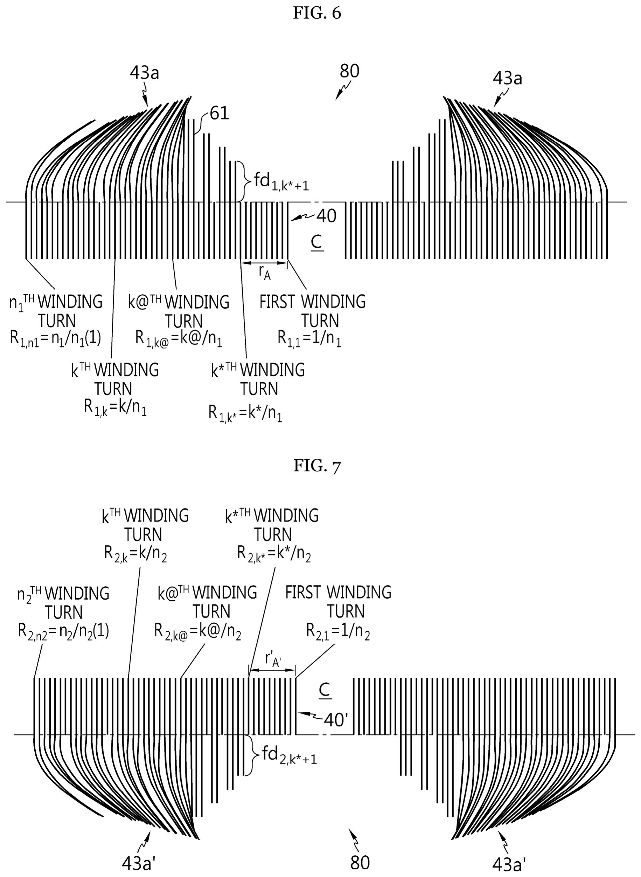

Preferably, in the winding structure of the first electrode, the bending length fd1,k*+1 of the uncoated portion at the relative radial position R1,k*+1 of the k*+1th winding turn may be equal to or shorter than the radial length (rA in FIG. 6) of the relative radial position R1,1 of the first winding turn to the k*th relative radial position R1,k*.

Preferably, in the winding structure of the first electrode, the cavity in the core of the electrode assembly may not be blocked by the bent portion of the uncoated portion of the first electrode located in the region of the relative radial position R1,k*+1 of the k*+1th winding turn to R1,last.

Preferably, in the winding structure of the second electrode, the uncoated portion in the region from the relative radial position R2,1 of the first winding turn to the first relative radial position R2,k* of the k*th winding turn may have a lower height than the uncoated portion in the region of the relative radial position R2,k*+1 of the k*+1th winding turn to the relative radial position R2,last located outer than the R2,k*+1, and may not be bent toward the core.

R2,last represents the relative radial position with respect to the outermost winding turn index where the uncoated portion bent toward the core in the second electrode is located.

In one example, the relative radial position R2,last may be 1.

In another example, the relative radial position R2,last may be R2,n2-p. R2,n2-p represents the relative radial position of the winding turn obtained by subtracting the turn number p from the outermost winding turn of the second electrode. The turn number p is the number of turns that do not include an uncoated portion that is bent based on the outermost winding turn, and is a natural number of 1 or more. For example, if there is no bent uncoated portion in the n2th winding turn, which is the outermost winding turn of the second electrode, and the n2-1th winding turn, p is 2.

Preferably, in the winding structure of the second electrode, the bending length fd2,k*+1 of the uncoated portion located at the relative radial position R2,k*+1 of the k*+1th winding turn may be equal to or shorter than the radial length (r'A' in FIG. 7) of the relative radial position R2,1 of the first winding turn to the first relative radial position R2,k* of the k*th winding turn.

Preferably, in the winding structure of the second electrode, the cavity in the core of the electrode assembly may not be covered by the bent portion of the uncoated portion of the second electrode located in the region of the relative radial position R2,k*+1 of the k*+1th winding turn to the relative radial position R2,last.

Preferably, in the winding structure of the first electrode, the uncoated portion in a region from the relative radial position R1,k*+1 of the k*+1th winding turn to a second relative radial position R1,k@ of a preset k@th winding turn may be divided into a plurality of segments, whose heights increase stepwise or gradually toward the outer circumference.

Preferably, in the winding structure of the first electrode, the uncoated portion of the first electrode from a relative radial position R1,k@+1 of a preset k@+1th winding turn to the relative radial position R1,last located outer than the R1,k@+1 may be divided into a plurality of segments, and heights of the plurality of segments may be substantially the same from the relative radial position R1,k@+1 to the relative radial position R1,last

R1,last represents a relative radial position of an outermost winding turn where the uncoated portion bent toward the core in the first electrode is located.

In one example, the relative radial position R1,last may be 1.

In another example, the relative radial position R1,last may be R1,n1-p. R1,n1-p represents the relative radial position of the winding turn obtained by subtracting the turn number p from the outermost winding turn of the first electrode. The turn number p is the number of turns that do not include an uncoated portion that is bent based on the outermost winding turn, and is a natural number of 1 or more. For example, if there is no bent uncoated portion in the n1th winding turn, which is the outermost winding turn of the first electrode, and the n1-1th winding turn, p is 2.

Preferably, in the winding structure of the second electrode, the uncoated portion in a region from the relative radial position R2,k*+1 of the k*+1th winding turn to a second relative radial position R2,k@ of a preset k@th winding turn may be divided into a plurality of segments, whose heights increase stepwise or gradually toward the outer circumference.

Preferably, in the winding structure of the second electrode, the uncoated portion of the second electrode from a relative radial position R2,k@+1 of a preset k@+1th winding turn to the relative radial position R2, last located outer than the R2,k@ may be divided into a plurality of segments, and heights of the plurality of segments may be substantially the same from the relative radial position R2,k@+1 to the relative radial position R2,last
R2,last represents a relative radial position of an outermost winding turn where the uncoated portion bent toward the core in the second electrode is located.

In one example, the relative radial position R2,last may be 1.

In another example, the relative radial position R2,last may be R2,n2-p. R2,n2-p represents the relative radial position of the winding turn obtained by subtracting the turn number p from the outermost winding turn of the second electrode. The turn number p is the number of turns that do not include an uncoated portion that is bent based on the outermost winding turn, and is a natural number of 1 or more. For example, if there is no bent uncoated portion in the n2th winding turn, which is the outermost winding turn of the second electrode, and the n2-1th winding turn, p is 2.

Preferably, in the winding structure of the first electrode, the uncoated portion bent toward the core may be divided into a plurality of segments, and at least one of a height in a winding axis direction and a width in a winding direction of the plurality of segments may increase stepwise from the core toward the outer circumference individually or in groups.

Preferably, in the winding structure of the second electrode, the uncoated portion bent toward the core may be divided into a plurality of segments, and at least one of a height in a winding axis direction and a width in a winding direction of the plurality of segments may increase stepwise from the core toward the outer circumference individually or in groups.

Preferably, when the bent portion of the uncoated portion is divided into a plurality of segments, each of the plurality of segments may satisfy at least one condition among a width (D1) condition of 1 mm to 11 mm in a winding direction; a height (D2) condition of 2 mm to 10 mm in a winding axis direction; and a separation pitch (D3) condition of 0.05 mm to 1 mm in the winding direction.

Preferably, a predetermined gap G may be provided between the bottom D4 of the cut groove of the segment and the active material layer.

Preferably, an insulating coating layer may be formed at a boundary region between the uncoated portion and the active material layer, and a predetermined gap G may be provided between a bottom D4 of a cut groove of the segment and the insulating coating layer.

The gap may be 0.2 mm to 4 mm.

Preferably, when the bent portion of the uncoated portion is divided into a plurality of segments, the plurality of segments may form a plurality of segment groups from the core toward the outer circumference, and segments belonging to the same segment group may be the same as each other in terms of at least one element of a width in a winding direction, a height in a winding axis direction, and a separation pitch in the winding direction.

Preferably, the at least one element identical in the segments belonging to the same segment group may increase gradually or stepwise from the core toward the outer circumference.

Preferably, the segments belonging to the same segment group may increase gradually or stepwise from the core toward the outer circumference in terms of at least one of a width in the winding direction, a height in the winding axis direction, and a separation pitch in the winding direction.

In an embodiment, at least a part of the plurality of segment groups may be disposed in the same winding turn of the electrode assembly.

The segments belonging to the same segment group may constitute a part or all of the same winding turn and a part of a winding turn adjacent thereto.

The segments belonging to the same segment group may constitute all of the same winding turn, a part or all of a winding turn adjacent thereto toward the core, and a part or all of a winding turn adjacent thereto toward the outer circumference.

In another aspect, there is also provided a cylindrical battery including the electrode assembly described above. The cylindrical battery may comprise an electrode assembly in which a first electrode, a second electrode, and a separator interposed therebetween are wound based on one axis to define a core and an outer circumference, wherein at least one of the first electrode and the second electrode includes an uncoated portion provided at a long side end and exposed to the outside of the separator along a longitudinal direction of the electrode assembly, at least a part of the uncoated portion is bent in a radial direction of the electrode assembly to form a bending surface, and the bending surface includes a region (second region) in which the number of overlapping layers of the uncoated portion is kept constant as a criterion layer number along the radial direction; a battery housing configured to accommodate the electrode assembly and electrically connected to one of the first electrode and the second electrode to have a first polarity; a sealing body configured to seal an open end of the battery housing; a terminal having a surface exposed to the outside and electrically connected to the other of the first electrode and the second electrode to have a second polarity; and a current collecting plate welded to overlap at least a part of the region and electrically connected to any one of the battery housing and the terminal.

Preferably, assuming that the total number of winding turns of the electrode including the uncoated portion is ni (when i is 1, it is a factor for the first electrode, and when i is 2, it is a factor for the second electrode), when a value obtained by dividing the winding turn index k (a natural number of 1 to ni) at a kth winding turn position by the total number of winding turns ni is defined as a relative radial position Ri,k for the winding turn index k, a ratio of a length of the radial region of Ri,k satisfying the condition that the number of overlapping layers of the uncoated portion is 10 or more may be at least 25% or more compared to the radius of the electrode assembly.

The second region and the welding region of the current collecting plate may overlap by 50% or more based on the radial direction of the electrode assembly.

The overlap ratio of the welding region may be determined as the ratio of the area of the welding region belonging to the second region to the total area of the welding region. The welding region may be a region in which welding beads are substantially formed.

In another aspect of the present disclosure, there is also provided a battery pack comprising the cylindrical battery described above, and a vehicle including comprising the battery pack.

### ADVANTAGEOUS EFFECTS

According to one aspect of the present disclosure, when bending the uncoated portions exposed at both ends of the electrode assembly, even if the welding output is increased, damage to the separator or the active material layer may be prevented by sufficiently securing a region in which the uncoated portions are overlapped in a minimum layer number or more in the radial direction of the electrode assembly. The minimum layer number may be 10.

According to still another aspect of the present disclosure, when bending the uncoated portions, the region in which the number of overlapping layers of the uncoated portions is kept constant as a criterion layer number may be sufficiently secured in the radial direction of the electrode assembly, so that the welding work is performed easily and precisely. The criterion layer number may be 10 or more.

According to still another aspect of the present disclosure, the structure of the uncoated portion adjacent to the core of the electrode assembly may be improved to prevent the cavity in the core of the electrode assembly from being blocked when the uncoated portions are bent, so that the electrolyte injection process and the welding process for the battery housing and the current collecting plate may be easily performed.

According to still another aspect of the present disclosure, an electrode assembly with improved energy density and reduced resistance may be provided by directly welding the bending surface of the uncoated portion to the current collecting plate instead of an electrode tab in a strip form.

According to still another aspect of the present disclosure, a cylindrical battery having a structure with low internal resistance and improved welding strength between the current collecting plate and the uncoated portion, and a battery pack and a vehicle including the cylindrical battery may be provided.

In addition, the present disclosure may have several other effects, and such effects will be described in each embodiment, or any description that can be easily inferred by a person skilled in the art will be omitted for an effect.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used for manufacturing a conventional tab-less cylindrical battery.
FIG. 2 is a diagram showing an electrode winding process of the conventional tab-less cylindrical battery.
FIG. 3 is a diagram showing a process of welding a current collecting plate to a bending surface of an uncoated portion in the conventional tab-less cylindrical battery.
FIG. 4 is a plan view showing a structure of an electrode according to an embodiment of the present disclosure.
FIG. 5 is a diagram showing the definitions of width, height and separation pitch of a segment according to an embodiment of the present disclosure.
FIG. 6 is a diagram showing a winding turn structure of a first electrode at an upper portion of the electrode assembly according to an embodiment of the present disclosure.
FIG. 7 is a diagram showing a winding turn structure of a second electrode at a lower portion of the electrode assembly according to an embodiment of the present disclosure.
FIG. 8 is a partially sectioned view showing an electrode assembly with a radius of 22 mm included in a cylindrical battery with a form factor of 4680, in which a radial length of a relative radial region where the uncoated portions of the first electrode are bent from the outer circumference toward the core to be overlapped into 10 or more layers is 25% or more based on the radius of the electrode assembly.
FIG. 9 is a cross-sectional view showing a cylindrical battery according to an embodiment of the present disclosure, taken along the Y-axis direction.
FIG. 10 is a cross-sectional view showing a cylindrical battery according to another embodiment of the present disclosure, taken along the Y-axis direction.
FIG. 11 is a diagram schematically showing a battery pack including the cylindrical battery according to an embodiment of the present disclosure.
FIG. 12 is a diagram showing a vehicle including the battery pack according to an embodiment of the present disclosure.

### WAYS FOR CARRYING OUT THE INVENTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help understanding of the present disclosure, the accompanying drawings are not drawn to scale, and the dimensions of some components may be exaggerated. In addition, the same reference numerals may be assigned to the same elements in different embodiments.

First, an electrode assembly according to an embodiment of the present disclosure will be described. The electrode assembly is a jelly-roll type electrode assembly in which a first electrode and a second electrode having a sheet shape and a separator interposed therebetween are wound based on one axis to define a core and an outer circumference.

For convenience of explanation, a direction that goes along a longitudinal direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radius direction or a radial direction X. Among them, in particular, the direction that gets closer to the winding axis is referred to as a centripetal direction, and the direction that faces away from the winding axis is referred to as a centrifugal direction. Then, it may be understood that the width direction of the electrode before winding corresponds to the winding axis direction and the Y axis, and the longitudinal direction of the electrode before winding corresponds to the circumferential direction and the X axis.

Preferably, at least one of the first electrode and the second electrode includes an uncoated portion not coated with an active material at a long side end in the winding direction. At least a part of the uncoated portion is used as an electrode tab by itself. According to the embodiment, the first electrode includes an uncoated portion at an end of an upper portion on the drawing, and the second electrode includes an uncoated portion at an end of a lower portion on the drawing.

FIG. 4 is a plan view showing a structure of an electrode 40 according to an embodiment of the present disclosure.

Referring to FIG. 4, an electrode 40 of the first embodiment includes a current collector 41 made of a metal foil and an active material layer 42. The metal foil may be aluminum or copper, and is appropriately selected according to the polarity of the electrode 40. The active material layer 42 is formed on at least one surface of the current collector 41 and includes an uncoated portion 43 at a long side end in a winding direction X. The uncoated portion 43 is a region that is not coated with an active material. For reference, the winding direction X of the electrode 40 spreading before winding may correspond to a peripheral direction (circumferential direction) surrounding the central axis of the cylindrical electrode assembly after winding. An insulating coating layer 44 may be formed at a boundary between the active material layer 42 and the uncoated portion 43. At least a part of the insulating coating layer 44 is formed to overlap with the boundary between the active material layer 42 and the uncoated portion 43. The insulating coating layer 44 may include a polymer resin and may include an inorganic filler such as SiO2 and Al2O3.

Preferably, the bent portion of the uncoated portion 43 of the electrode 40 may include a plurality of segments 61. The plurality of segments 61 may have heights increasing stepwise from the core toward the outer circumference in at least a partial region in the winding direction. The region where heights increase stepwise may exist in a region except for an uncoated portion region (core side uncoated portion A) adjacent to the core of the electrode assembly. Preferably, the core side uncoated portion A has a relatively lower height than other portions. The number of winding turns including the core side uncoated portion A may be set in advance.

The segment 61 may be formed by laser notching. The segment 61 may be formed by a known metal foil cutting process such as ultrasonic cutting or punching.

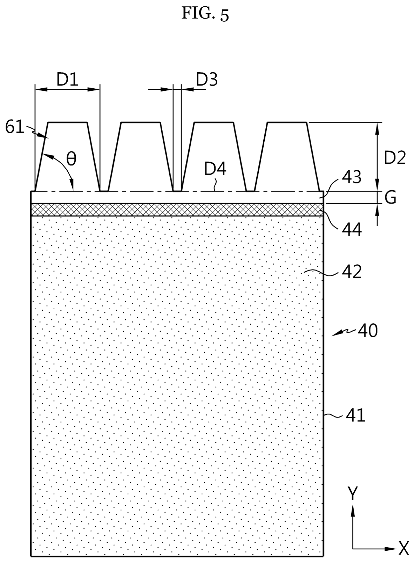

In order to prevent the active material layer 42 and/or the insulating coating layer 44 from being damaged while bending the uncoated portion 43, a predetermined gap is preferably provided between a bottom of a cut groove between the segments 61 (a portion indicated by D4 in FIG. 5 and a portion indicated by a one-dotted chain line in FIGS. 6 and 7) and the active material layer 42 and/or the insulating coating layer 44. This is because the stress is concentrated near the bottom of the cut groove when the uncoated portion 43 is bent. The gap is preferably 0.2 mm to 4 mm. When the gap is adjusted to the corresponding numerical range, it is possible to prevent the active material layer 42 and/or the insulating coating layer 44 near the bottom of the cut groove from being damaged by the stress generated while bending the uncoated portion 43. The cut groove may be replaced with a cut line. The cut line may be formed by cutting the uncoated portion 43 with a cutter, and the uncoated portion 43 is substantially not removed in the portion where the cut line is formed. In the present disclosure, the cut line is also considered as an equivalent of the cut groove.

The plurality of segments 61 may form a plurality of segment groups while going from the core toward the outer circumference. Widths, heights, and separation pitches of segments belonging to the same segment group may be substantially the same.

FIG. 5 is a diagram showing the definitions of width, height and separation pitch of the segment 61 according to an embodiment of the present disclosure.

Referring to FIG. 5, the width D1, height D2, and separation pitch D3 of the segment 61 are designed to prevent the uncoated portion 43 from being torn while bending the uncoated portion 43 and also to prevent abnormal deformation of the uncoated portion 43 while sufficiently increasing the number of overlapping layers of the uncoated portion 43 in order to improve welding strength. The abnormal deformation means that the uncoated portion below the bending point D4 does not maintain a straight state and is irregularly deformed while collapsing down.

Preferably, the width D1 of the segment 61 may be adjusted in the range of 1 mm to 11 mm. If D1 is less than 1 mm, when the segment 61 is bent toward the core, an insufficient overlapping region or void (gap) is generated, thereby not to ensure sufficient welding strength. Meanwhile, when D1 exceeds 11 mm, when the segment 61 is bent, the uncoated portion 43 near the bending point D4 may be torn by stress.

The height of the segment 61 may be adjusted in the range of 2 mm to 10 mm. If D2 is less than 2 mm, when the segment 61 is bent toward the core, an insufficient overlapping region or void (gap) is generated, thereby not to ensure sufficient welding strength. Meanwhile, when D2 exceeds 10 mm, it is difficult to manufacture an electrode while uniformly maintaining the flatness of the uncoated portion in the winding direction X. That is, the height of the uncoated portion increases, resulting in a swell.

The separation pitch D3 of the segment 61 may be adjusted in the range of 0.05 mm to 1 mm. If D3 is less than 0.05 mm, the uncoated portion 43 near the bending point D4 may be torn due to stress when the segment 61 is bent, and the impregnability of the electrolyte may be reduced. Meanwhile, if D3 exceeds 1 mm, the impregnability of the electrolyte does not increase any more, and when the segment 61 is bent toward the core, a region or void (gap) where the segments 61 do not sufficiently overlap each other may be generated, thereby not to ensure sufficient welding strength.

Referring to FIG. 4 again, the width (length in the winding direction) (dA) of the core side uncoated portion A is designed under the condition that the cavity of the electrode assembly core is not covered when the segment 61 is bent toward the core.

In one example, the width (dA) of the core side uncoated portion A may increase in proportion to the bending length of the segment 61 of Group 1. The bending length corresponds to the height D2 of the segment 61 based on the bending point D4 (FIG. 5).

In a specific example, when the electrode 40 is used to manufacture an electrode assembly of a cylindrical battery having a form factor of 4680, the width (dA) of the core side uncoated portion A may be set to 180 mm to 350 mm depending on the diameter of the core of the electrode assembly.

In one embodiment, the width of each segment group may be designed to make the same winding turn of the electrode assembly.

The same winding turn may belong to any one segment group.

Less than 1 winding turn may belong to any one segment group.

At least one winding turn may belong to any one segment group. Here, at least one winding turn may include a partial winding turn. The partial winding turn is a winding turn expressed by a rational number less than 1, such as a 5/10 turn, 4/10 turn, or 3/10 turn.

In one modification, the width and/or height and/or separation pitch of the segments 61 belonging to the same segment group may increase or decrease gradually and/or stepwise and/or irregularly within the group.

Groups 1 to 7 are only examples of the segment groups. The number of groups and the number of segments 61 included in each group may be adjusted so that the stress is distributed to the maximum during the bending process of the uncoated portion 43 and the segments 61 are overlapped in multiple layers to ensure sufficient welding strength.

In one modification, segments of some groups may be removed. In this case, the height of the uncoated portion in a region from which the segments are removed may be the same as the height of the core side uncoated portion A.

The groups may include a group forming the winding turn at the outermost circumferential side.

The height of the segment may remain substantially constant until the outer circumference of the electrode assembly after the predetermined region. In the illustrated embodiment, the heights of the segments located closer to the outer circumference than Group 7 may be substantially the same.

In a specific example, the width (dA) of the core side uncoated portion A may be 180 to 350 mm. The width of Group 1 may be 35% to 55% of the width of the core side uncoated portion A. The width of Group 2 may be 120% to 150% of the width of Group 1. The width of Group 3 may be 110% to 135% of the width of Group 2. The width of Group 4 may be 75% to 90% of the width of Group 3. The width of Group 5 may be 120% to 150% of the width of Group 4. The width of Group 6 may be 100% to 120% of the width of Group 5. The width of Group 7 may be 90% to 120% of the width of Group 6.

The widths of Groups 1 to 7 do not show a constant increase or decrease pattern because the widths of the segments gradually increase from Group 1 to Group 7, but the number of segments included in each group is limited to an integer number. Therefore, the number of segments may be reduced in a specific segment group. Therefore, the width of the group may show an irregular change pattern as shown in the above example while going from the core toward the outer circumference.

That is, when the width in the winding direction for three segment groups consecutively adjacent in the radial direction of the electrode assembly is W1, W2 and W3, respectively, a combination of segment groups where W3/W2 is smaller than W2/W1 may be included.

In the above specific examples, Groups 4 to 6 correspond to this. The width ratio of Group 5 to Group 4 is 120% to 150%, and the width ratio of Group 6 to Group 5 is 100% to 120%, which is smaller than 120% to 150%.

Preferably, if the radius of the electrode assembly increases, the radius of curvature increases. If the lower internal angle (θ) of the segment 61 increases as the radius of the electrode assembly increases, the stress generated in the radial direction and the circumferential direction when the segment 61 is bent may be relieved. In addition, if the lower internal angle (θ) increases, when the segment 61 is bent, the area overlapping with the segment 61 at the inner side and the number of overlapping layers also increase, so that welding strength may be uniformly secured in the radial direction and the circumferential direction and the bending surface may be formed flat. In addition, the gap between neighboring segments in a bent state may be reduced.

In one example, if the electrode 40 is used to manufacture an electrode assembly of a cylindrical battery having a form factor of 4680, when the radius of the electrode assembly 40 increases from 4 mm to 22 mm, the internal angle of the segment 61 may be increased stepwise in the range of 60 degree to 85 degree.

In the present disclosure, the shape of the segment 61 may be changed to a triangle, a semi-circular shape, a semi-ellipse shape, a parallelogram shape, and the like.

In addition, it is possible to differently change the shape of the segment 61 according to locations. In one example, for a region in which stress is concentrated, a round shape (e.g., semicircle, semi-ellipse, etc.) that is advantageous for stress distribution may be applied, and for a region in which stress is relatively low, a polygonal shape (e.g., square, trapezoid, parallelogram, etc.) having a wide area as much as possible may be applied.

The segment structure of the uncoated portion may also be applied to the core side uncoated portion A. However, when the segment structure is applied to the core side uncoated portion A, a reverse forming phenomenon in which the end of the core side uncoated portion A is curved toward the outer circumference when the segment is bent according to the radius of curvature of the core may occur. Therefore, even if there is no segment structure in the core side uncoated portion A, or even if the segment structure is applied, it is desirable to adjust the width and/or height and/or separation pitch of the segment 61 to a level where reverse forming does not occur in consideration of the radius of curvature of the core.

The electrode structure of the above embodiments (modifications) may be applied to the first electrode and/or the second electrode having different polarities included in the jelly-roll type electrode assembly. In addition, when the electrode structure of the above embodiments (modifications) is applied to any one of the first electrode and the second electrode, the conventional electrode structure may be applied to the other one. In addition, the electrode structures applied to the first electrode and the second electrode may not be identical but be different from each other.

For example, when the first electrode and the second electrode are a positive electrode and a negative electrode, respectively, any one of the above embodiments (modifications) may be applied to the first electrode and the conventional electrode structure (see FIG. 1) may be applied to the second electrode.

As another example, when the first electrode and the second electrode the second electrode are a positive electrode and a negative electrode, respectively, any one of the above embodiments (modifications) may be selectively applied to the first electrode and any one of the above embodiments (modifications) may be selectively applied to the second electrode.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula A[AxMy]O2+z (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; and the stoichiometric coefficients x, y and z are selected so that the compound maintains electrical neutrality).

In another example, the positive electrode active material may be an alkali metal compound xLiM1O2-(1-x)Li2M2O3 disclosed in US6,677,082, US6,680,143, et al., wherein M1 includes at least one element having an average oxidation state 3; M2 includes at least one element having an average oxidation state 4; and 0≤x≤1).

In still another example, the positive electrode active material may be lithium metal phosphate expressed by a general formula LiaM1xFe1-xM2yP1-yM3zO4-z (M1 includes at least one element selected from the Ti, Si, Mn, Co, Fe, V, Cr, Mo, Ni, Nd, Al, Mg and Al; M2 includes at least one element selected from Ti, Si, Mn, Co, Fe, V, Cr, Mo, Ni, Nd, Al, Mg, Al, As, Sb, Si, Ge, V and S; M3 includes a halogen element optionally including F; 0 < a ≤2, 0 ≤ x ≤ 1, 0 ≤ y < 1, 0 ≤ z < 1; the stoichiometric coefficient a, x, y and z are selected so that the compound maintains electrical neutrality), or Li3M2(PO4)3 (M includes at least one element selected from Ti, Si, Mn, Fe, Co, V, Cr, Mo, Ni, Al, Mg and Al).

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO2 and SnO2 with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of Pb(Zr,Ti)O3 (PZT), Pb1-xLaxZr1-yTiyO3 (PLZT), PB(Mg3Nb2/3)O3-PbTiO3 (PMN-PT), BaTiO3, hafnia (HfO2), SrTiO3, TiO2, Al2O3, ZrO2, SnO2, CeO2, MgO, CaO, ZnO and Y2O3.

The electrode assembly according to an embodiment is a jelly-roll type electrode assembly 80 in which the electrode 40 according to the embodiment is applied to a first electrode (positive electrode) and a second electrode (negative electrode).

FIG. 6 is a diagram showing a winding turn structure of the first electrode (positive electrode) at an upper portion of the electrode assembly 80. FIG. 7 is a diagram showing a winding turn structure of the second electrode (negative electrode) at a lower portion of the electrode assembly 80.

The electrode assembly 80 may be manufactured by the winding method described with reference to FIG. 2. For convenience of description, the protruding structure of the uncoated portions 43a, 43a' extending to the outside of the separator is shown in detail, and the winding structure of the separator is not depicted in detail. The uncoated portion 43a protruding to the upper portion of the electrode assembly 80 extends from the first electrode 40, and the uncoated portion 43a' protruding to the lower portion of the electrode assembly 80 extends from the second electrode 40'. The position of the end of the separator is indicated by a one-dotted chain line.

A pattern in which the heights of the uncoated portions 43a, 43a' change is schematically shown. That is, the height of the uncoated portions 43a, 43a' may change irregularly depending on the position where the section is cut. For example, if the side portion of the trapezoid segment 61 is cut, the height of the uncoated portion in the cross section is lower than the height of the segment 61. Accordingly, it should be understood that the height of the uncoated portions 43a, 43a' shown in the cross-sectional drawings of the electrode assembly corresponds to the average of the heights (D2 in FIG. 5) of the uncoated portions included in each winding turn.

Hereinafter, structural features of the uncoated portion 43a of the first electrode 40 will be described in detail with reference to the drawings. Preferably, the uncoated portion 43a' of the second electrode 40' may have substantially the same characteristics as the uncoated portion 43a of the first electrode 40.

Referring to FIGS. 6 and 7, the uncoated portions 43a, 43a' of the first electrode 40 and the second electrode 40' may be used as electrode tabs by themselves.

In the winding structure of the first electrode 40, when the total number of winding turns of the first electrode 40 is n1, if a value obtained by dividing the winding turn index k (a natural number of 1 to n1) of the kth winding turn by the total number of winding turns n1 is defined as a relative radial position R1,k of the kth winding turn, a radial length of the relative radial position R1,k region (called a first region) where the number of overlapping layers of the bent portion of the uncoated portion is 10 or more is 25% or more based on the radius of the electrode assembly 80.

For reference, the relative radial position of the first winding turn is 1/n1 because the winding turn index is 1. The relative radial position of the kth winding turn is k/n1. The relative radial position of the last n1th winding turn is 1. That is, the relative radial position increases from 1/n1 to 1 from the core of the electrode assembly 80 to the outer circumference.

In the winding structure of the second electrode 40', when the total number of winding turns of the second electrode 40' is n2, if a value obtained by dividing the winding turn index k (a natural number of 1 to n2) of the kth winding turn by the total number of winding turns n2 is defined as a relative radial position R2,k of the kth winding turn, the radial length of the relative radial position R2,k region where the number of overlapping layers of the bent portion of the uncoated portion is 10 or more is 25% or more based on the radius of the electrode assembly 80.

For reference, the relative radial position of the first winding turn is 1/n2 because the winding turn index is 1. The relative radial position of the kth winding turn is k/n2. The relative radial position of the last n2th winding turn is 1. That is, the relative radial position increases from 1/n2 to 1 from the core of the electrode assembly 80 to the outer circumference.

Preferably, the winding turn index k of the first electrode 40 and the second electrode 40' should be understood as a variable to which different values can be assigned.

When welding the current collecting plate 30, 31 (see FIG. 3) to the bending surface of the uncoated portion 43, 43', it is desirable to increase the power of the laser to sufficiently secure the welding strength. If the output of the laser is increased, the laser may penetrate into the electrode assembly 80 through the region where the uncoated portions 43a, 43a' overlaps, thereby damaging the separator, the active material layer, or the like. Therefore, in order to prevent laser penetration, it is desirable to increase the number of overlapping layers of the uncoated portion 43a, 43a' to a minimum layer number or more. In order to increase the number of overlapping layers of the uncoated portion 43a, 43a', the height of the segment 61 should be increased. However, when the height of the segment 61 is increased, swells may occur in the uncoated portion 43a, 43a' during the process of manufacturing the electrode 40. Therefore, it is desirable to adjust the height of the segment 61 to an appropriate level.

As described above, if the ratio of the radial length of the relative radial position region in which the number of overlapping layers of the bent portion of the uncoated portion is 10 or more is designed to be 25% or more based on the radius of the electrode assembly and if the current collecting plate is laser-welded so that the region where the bent portion of the uncoated portion overlaps in 10 or more layers overlaps with at least a part of the welding region, even if the laser output is increased, the overlapped portion of the uncoated portion sufficiently masks the laser, so it is possible to prevent the separator, the active material layer, or the like from being damaged by the laser.

Preferably, the power of the laser may be adjusted to 260W or more, but the present disclosure is not limited thereto. If the power of the laser is increased to 260W or more, the welding strength may be sufficiently increased. In one example, the welding strength may be increased to 2 kgf/cm2 or more.

Meanwhile, in the winding structure of the first electrode 40, the radial length of the relative radial position R1,k region (called a second region) in which the number of overlapping layers of the bent portion of the uncoated portion is 10 or more and is kept at a constant number is 25% or more based on the radius of the electrode assembly 80.

In the winding structure of the first electrode 40, the constant number may be a maximum value of the number of overlapping layers under the design condition of the uncoated portion of the first electrode 40.

In the winding structure of the second electrode 40', the radial length of the relative radial position R2,k region (called a second region) in which the number of overlapping layers of the bent portion of the uncoated portion is 10 or more and is kept at a constant number is 25% or more based on the radius of the electrode assembly 80.

In the winding structure of the second electrode 40', the constant number may be a maximum value of the number of overlapping layers under the design condition of the uncoated portion of the second electrode 40'.

When welding the current collecting plate to the bending surface of the uncoated portion, it is preferable that all overlapping layers of the bending surface corresponding to the welding point are welded. To this end, if the welding strength is increased corresponding to the number of overlapping layers, all overlapping layers may be welded to each other. However, if there are regions where the number of overlapping layers is different from each other in the region where welding is performed, excessive welding may be performed in some regions and insufficient welding may be performed in some regions. Therefore, in this embodiment, a region in which the number of overlapping layers is equal to or greater than the minimum layer number (10) and the number of overlapping layers is constant is to be additionally secured in the radial direction of the electrode assembly. This may be achieved by a pattern in which the height of the uncoated portion is gradually increased from the core toward the outer circumference and then is kept constant. A specific embodiment for this will be described later.

Preferably, the first electrode 40 includes a current collector 41 and an active material coating layer 42 formed on at least one surface thereof, the current collector 41 has a thickness of 10 um to 25 um, and an interval between the uncoated portions of winding turns adjacent in the radial direction of the electrode assembly 80 may be 200 um to 500 um. The current collector 41 of the first electrode 40 may be aluminum.

The second electrode 40' includes a current collector and an active material coating layer formed on at least one surface thereof, the current collector has a thickness of 5 um to 20 um, and an interval between the uncoated portions of winding turns adjacent in the radial direction of the electrode assembly 80 may be 200 um to 500 um. The current collector of the second electrode 40' may be copper.

Preferably, in the winding structure of the first electrode 40, the height of the uncoated portion in the region (rA) from the relative radial position R1,1 to the preset first relative radial position R1,k* of the first electrode 40 may be smaller than the height of the uncoated portion in the region from the relative radial position R1,k*+1 of the k*+1th winding turn to the relative radial position 1. The height of the uncoated portion in the region from the relative radial position R1,1 to the preset first relative radial position R1,k* corresponds to the height of the uncoated portion of the core side uncoated portion A (see FIG. 4).

In an embodiment, the relative radial position 1 may be replaced with R1,last. R1,last represents a relative radial position for the outermost winding turn index where the uncoated portion bent toward the core in the first electrode 40 is located. The relative radial position R1,last may be R1,n1-p. R1,n1-p represents a relative radial position of the winding turn obtained by subtracting the turn number p from the outermost winding turn of the first electrode. The turn number p is the number of turns that do not include the bent uncoated portion based on the outermost winding turn. For example, if there is no bent uncoated portion in the n1th winding turn, which is the outermost winding turns of the first electrode, and the ni-1th winding turn, p is 2.

Preferably, in the winding structure of the first electrode 40, the height of the uncoated portion in the region A from the relative radial position R1,1 to the first relative radial position R1,k* may be lower than the height of the bending surface B formed by overlapping the bent uncoated portions.

Preferably, in the winding structure of the first electrode 40, the uncoated portion in the region from the relative radial position R1,1 to the first relative radial position R1,k* may not be bent toward the core of the electrode assembly 80.

Similar to the first electrode 40, in the winding structure of second electrode 40', the height of the uncoated portion in the region from the relative radial position R2,1 to the preset first relative radial position R2,k* may be smaller than the height of the uncoated portion in the region from the relative radial position R2,k*+1 of the k*+1th winding turn to the relative radial position 1.

In an embodiment, the relative radial position 1 may be replaced with R2,last. R2,last represents a relative radial position for the outermost winding turn index where the uncoated portion bent toward the core in the second electrode is located. The relative radial position R2,last may be R2,n2-p. R2,n2-p represents a relative radial position of the winding turn obtained by subtracting the turn number p from the outermost winding turn of the second electrode. The turn number p is the number of turns that does not include the bent uncoated portion based on the outermost winding turn. For example, if there is no bent uncoated portion in the n2th winding turn, which is the outermost winding turn of the second electrode, and the n2-1th winding turn, p is 2.

Preferably, the height of the uncoated portion in the region from the relative radial position R2,1 to the preset first relative radial position R2,k* may be lower than the height of the bending surface formed by overlapping the bent uncoated portions.

Preferably, the uncoated portion in the region A' (FIG. 4) from the relative radial position R2,1 to the first relative radial position R2,k* may not be bent toward the core of the electrode assembly.

In the secondary battery manufacturing process including the process of inserting the electrode assembly 80 into the battery housing, the uncoated portion located in at least one winding turn including the last winding turn may be deformed or buckled unintentionally. Accordingly, the uncoated portion located in at least one winding turn including the last winding turn may have a low height like an uncoated portion that is not bent in the region A, A' (see FIG. 4) near the core. According to this uncoated portion structure, the uncoated portion located in at least one winding turn including the last winding turn may not be bent.

In the following description, a structure in which an uncoated portion is high is formed to a portion corresponding to the last winding turn and the corresponding uncoated portion is bent is illustrated and described. However, the uncoated portion located in at least one winding turn including the last winding turn may also be low and not bent like the uncoated portion at the core.

Preferably, in the winding structure of the first electrode 40, the height of the uncoated portion in the region from the relative radial position R1,1 to the first relative radial position R1,k* may be lower than the height of the uncoated portion in the region from the relative radial position R1,k*+1 to the relative radial position 1 and may not be bent toward the core.

In the winding structure of the first electrode 40, the bending length fd1,k*+1 of the uncoated portion at the relative radial position R1,k*+1 may be shorter than the radial length (rA) from the relative radial position R1,1 to the relative radial position R1,k*. Therefore, the cavity C in the core of the electrode assembly 80 may not be blocked by the bent portion of the uncoated portion 43a located in the region of the relative radial position R1,k*+1 to the relative radial position 1.

Preferably, in the winding structure of the second electrode 40', the height of the uncoated portion in the region from the relative radial position R2,1 to the first relative radial position R2,k* may be lower than the height of the uncoated portion in the region from the relative radial position R2,k*+1 to the relative radial position 1, and may not be bent toward the core.

In the winding structure of the second electrode 40', the bending length fd2,k*+1 of the uncoated portion located at the relative radial position R2,k*+1 may be shorter than the length (r'A') from the relative radial position R2,1 to the first relative radial position R2,k*. Therefore, the cavity C in the core of the electrode assembly 80 may not be blocked by the bent portion of the uncoated portion located in the region of the relative radial position R2,k*+1 to the relative radial position 1.

Referring to FIGS. 4 and 6, in the winding structure of the first electrode 40, the uncoated portion in the region from the relative radial position R1,k*+1 to the second relative radial position R1,k@ of the preset k@th winding turn may be divided into a plurality of segments 61, whose heights increase stepwise or gradually toward the outer circumference.

In addition, in the winding structure of the first electrode 40, the uncoated portion of the first electrode 40 from the relative radial position R1,k@+1 of the preset k@+1th winding turn to the relative radial position 1 may be divided into a plurality of segments 61, and the heights of the plurality of segments 61 may be substantially the same from the relative radial position R1,k@+1 to the relative radial position 1.

Referring to FIGS. 4 and 7, in the winding structure of the second electrode 40', the uncoated portion in the region from the relative radial position R2,k*+1 to the second relative radial position R2,k@ of the preset k@th winding turn may be divided into a plurality segments of 61, whose heights increase stepwise or gradually toward the outer circumference.

In addition, in the winding structure of the second electrode 40', the uncoated portion of the second electrode 40' from the relative radial position R2,k@+1 of the preset k@+1th winding turn to the relative radial position 1 may be divided into a plurality of segments 61, and the heights of the plurality of segments 61 may be substantially the same from the relative radial position R2,k@+1 to the relative radial position 1.

Preferably, in the winding structure of the first electrode 40, the uncoated portion 43a bent toward the core may be divided into a plurality of segments 61, and at least one of the height in the winding axis direction and the width in the winding direction of the plurality of segments 61 may increase stepwise from the core toward the outer circumference individually or in groups.

Similarly, in the winding structure of the second electrode 40', the uncoated portion 43a' bent toward the core may be divided into a plurality of segments 61, and at least one of the height in the winding axis direction and the width in the winding direction of the plurality of segments 61 may increase stepwise from the core toward the outer circumference individually or in groups.

Preferably, when the bent portion of the uncoated portions 43a, 43a' is divided into a plurality of segments 61, each of the plurality of segments 61 may satisfy at least one condition among a width condition of 1 mm to 11 mm in the winding direction; a height condition of 2 mm to 10 mm in the winding axis direction; and a separation pitch condition of 0.05 mm to 1 mm in the winding direction.

Preferably, a predetermined gap may be provided between the bottom (indicated by D4 in FIG. 5) of the cut groove of the segment 61 and the active material layer 42. Preferably, the gap may be 0.2 mm to 4 mm.

Preferably, an insulating coating layer 44 may cover a boundary between the active material layer 42 and the uncoated portion. In the structure in which the insulating coating layer 44 is formed, a predetermined gap may be provided between the bottom (indicated by D4 in FIG. 5) of the cut groove of the segment 61 and the insulating coating layer 44. Preferably, the gap may be 0.2 mm to 4 mm.

Referring to FIG. 4, when the bent portion of uncoated portions 43a, 43a' is divided into a plurality of segments 61, the plurality of segments 61 may form a plurality of segment groups from the core toward the outer circumference, and segments belonging to the same segment group may be the same in terms of at least one of the width in the winding direction, the height in the winding axis direction, and the separation pitch in the winding direction.

Preferably, at least some of the plurality of segment groups may be disposed in the same winding turn of the electrode assembly 80.

Segments in the same winding turn may belong to the same segment group.

Segments in the same segment group may constitute the same winding turn.

Segments in the same segment group may constitute a part of the same winding turn and a part of its neighboring winding turn.

Segments in the same segment group may constitute all of the same winding turn and a part of its neighboring winding turn.

Segments in the same segment group may constitute all of the same winding turn, some or all of a winding turn adjacent thereto toward the core, and some or all of a winding turn adjacent thereto toward the outer circumference.

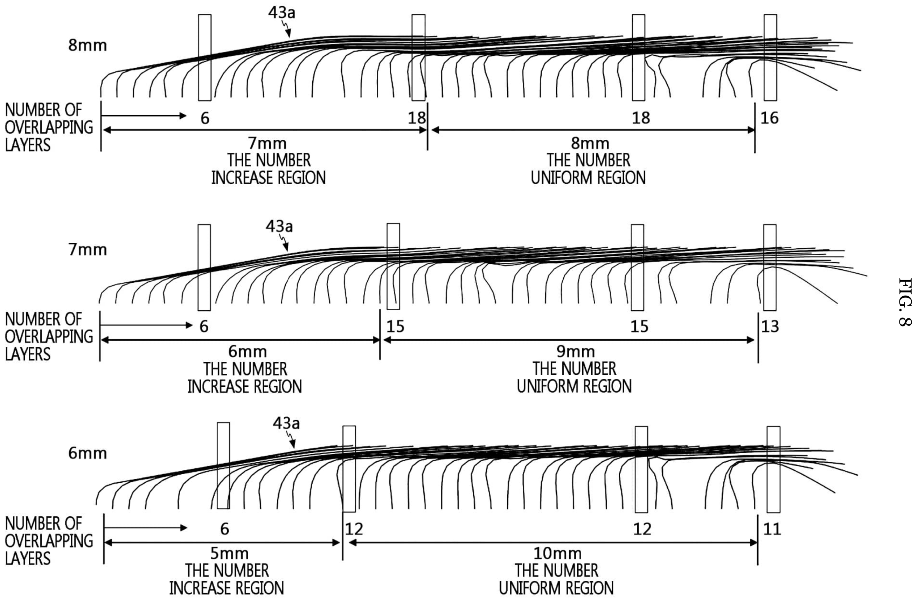

FIG. 8 is a partially sectioned view showing an electrode assembly with a radius of 22 mm included in a cylindrical battery with a form factor of 4680, in which a radial length of a relative radial region where the uncoated portions 43a of the first electrode 40 are bent from the outer circumference toward the core to be overlapped into 10 or more layers is 25% or more based on the radius (including the cavity of the core) of the electrode assembly.

The radius of the hollow in the core of the electrode assembly is 4 mm. The uncoated portion 43a is divided into a plurality of segments along the winding direction. The segments are disposed from the winding turn located at the 7 mm radius of the electrode assembly to the winding turn located at the 22 mm radius. The heights of the segments start at 3 mm and increase by 1 mm for every 1 mm increment of the radius, up to 6 mm, 7 mm or 8 mm.

In FIG. 8, the first cross-sectional view shows an embodiment in which the heights of segments increase from 3 mm to 8 mm in the radius of 7 mm to 12 mm of an electrode assembly and the heights of the segment are kept constant at 8 mm in the radius of 13 mm to 22 mm. The middle cross-sectional view shows an embodiment in which the heights of segments increase from 3 mm to 7 mm in the radius of 7 mm to 11 mm of the electrode assembly and the heights of the segments are maintained at 7 mm in the radius of 12 mm to 22 mm. The lower cross-sectional view shows an embodiment in which the heights of segments increase from 3 mm to 6 mm in the radius of 7 mm to 10 mm of the electrode assembly and the heights of the segments are maintained at 6 mm in the radius of 11 mm to 22 mm.

The description of the first electrode 40 with reference to FIG. 8 may be substantially equally applied to the second electrode.

Referring to FIG. 8, it may be found that the number of overlapping layers of the uncoated portion 43a gradually increases while going from the outer circumference toward the core, and the maximum value of the number of overlapping layers increases as the maximum height of the uncoated portion 43a increases.

For example, when the length (height) of the uncoated portion 43a increases from 3 mm to 8 mm, the number of overlapping layers of the uncoated portion 43a increases to 18 from the outer circumferential surface of the electrode assembly to the 7 mm region, and after the 7 mm region, the number of overlapping layers of the uncoated portion 43a is kept constant at the level of 18. In this embodiment, 18 is a maximum value of the number of overlapping layers, which corresponds to a criterion layer number of the present disclosure. The region where the maximum value of the number of overlapping layers is maintained includes the 11 mm radius point, which corresponds to the midpoint of the radius of the electrode assembly. In addition, in the radial region adjacent to the core, the number of overlapping layers of the uncoated portion 43a decreases from 18 to 16. In the relative radial position region (first region) in which the number of overlapping layers of the uncoated portion 43a is 10 or more, the radial length of the relative radial position region (second region) in which the number of overlapping layers of the uncoated portion 43a is uniform at the level of 16 to 18 is 8 mm, which is 36.4% of the 22 mm radius of the electrode assembly.

The region in which the number of overlapping layers is uniform may include a region in which the number of overlapping layers is maintained at a maximum and a region in which the number of overlapping layers decreases by one to three from the maximum near the core.

As another example, when the length (height) of the uncoated portion 43a increases from 3 mm to 7 mm, the number of overlapping layers of the uncoated portion 43a increases to 15 from the outer circumferential surface of the electrode assembly to the 6 mm region, and after the 6 mm region, the number of overlapping layers of the uncoated portion 43a is kept constant at the level of 15. In this embodiment, 15 is a maximum value of the number of overlapping layers, which corresponds to the criterion layer number of the present disclosure. The region where the maximum value of the number of overlapping layers is maintained includes the 11 mm radius point corresponding to the midpoint of the radius of the electrode assembly. In addition, in the radial region adjacent to the core, the number of overlapping layers of the uncoated portion 43a is reduced from 15 to 13. In the relative radial position regions (first region) in which the number of overlapping layers of uncoated portion 43a is 10 or more, the radial length of the relative radial position region (second region) where the number of overlapping layers of the uncoated portion 43a is uniform at the level of 13 to 15 is 9 mm, which is 40.9% of the 22 mm radius of the electrode assembly.

As another example, when the length (height) of the uncoated portion 43a increases from 3 mm to 6 mm, the number of overlapping layers of the uncoated portion 43a increases to 12 from the outer circumferential surface of the electrode assembly to the 5 mm region, and after the 5 mm region, the number of overlapping layers of the uncoated portion 43a is kept constant at the level of 12. In this embodiment, 12 is a maximum value of the number of overlapping layers, which corresponds to the criterion layer number of the present disclosure. The region where the maximum value of the number of overlapping layers is maintained includes the 11 mm radius point corresponding to the midpoint of the radius of the electrode assembly. In addition, in the radial region adjacent to the core, the number of overlapping layers of the uncoated portion 43a is reduced from 12 to 11. In the relative radial position regions (first region) in which the number of overlapping layers of the uncoated portion 43a is 10 or more, the radial length of the relative radial position regions (second region) in which the number of overlapping layers of the uncoated portion 43a is uniform at the level of 11 to 12 is 10 mm, which is 45.5% of the 22 mm radius of the electrode assembly.

According to an embodiment, when the maximum length (height) of the uncoated portion 43a is 6 mm to 8 mm, the length of the region in which the number of overlapping layers gradually increases from 5 mm to 7 mm as the maximum length (height) of the uncoated portion 43a is longer (higher). In addition, the length of the region where the number of overlapping layers is uniform increases from 8 mm to 10 mm as the maximum length (height) of the uncoated portion 43a is shorter (lower). In particular, the ratio of the radial length of the relative radial position region where the number of overlapping layers of uncoated portion 43a is uniform at 10 or more satisfies the condition of 25% or more based on the radius of the electrode assembly.

Compared to the above embodiment, when the maximum length (height) of the uncoated portion 43a is 4 mm or more and 5.5 mm or less, the ratio of the radial length of the relative radial position region in which the number of overlapping layers of the uncoated portion 43a is maintained uniform at 10 or more barely exceeds 25%, and the number of overlapping layers may be maintained at the level of 10 to 12.

Unlike the above embodiment, when the maximum length (height) of the uncoated portion 43a is 4 mm or less, there is no region in which the number of overlapping layers of the uncoated portion 43a is 10 or more.

Meanwhile, if the bending surface is formed under the condition that the length (height) of the uncoated portion 43a is not changed but is constant, the ratio of the radial length of the relative radial position region in which the number of overlapping layers of the uncoated portion 43a is kept uniform at 10 or more is significantly reduced, so it difficult to satisfy the condition of 25% or more.

For example, if the bending surface is formed in a state where the length (height) of the uncoated portion 43a is constant at 5.5 mm or more, the ratio of the radial length of the relative radial position region where the number of overlapping layers of the uncoated portion 43a is maintained uniform at 10 or more may be less than 25%.

As shown in FIG. 4, when the uncoated portion is formed such that the height of the uncoated portion increases from the core toward the outer circumference and is kept constant from a certain radial point, even if the height of the uncoated portion in the radial region adjacent to the core is lowered to the level of 3 mm, by increasing the height of the uncoated portion gradually or stepwise to 6 mm, 7 mm or 8 mm, or even 9 mm or 10 mm along the centrifugal direction, it is possible to secure a wide region in which the number of overlapping layers exceeds the minimum layer number (10) and is uniformly maintained at the criterion layer number (maximum value). For reference, 10 mm corresponds to the maximum design height of the uncoated portion. The height of the uncoated portion may be increased gradually or stepwise for every 1 mm increment of the radius or for every increment in the number of winding turns at regular intervals.

Various electrode assembly structures according to an embodiment (modification) of the present disclosure may be applied to a jelly-roll type cylindrical battery.

Preferably, the cylindrical battery may be, for example, a cylindrical battery whose form factor ratio (defined as a value obtained by dividing the diameter of the cylindrical battery by height, namely a ratio of diameter (Φ) to height (H)) is greater than about 0.4.

Here, the form factor means a value indicating the diameter and height of a cylindrical battery. The cylindrical battery according to an embodiment of the present disclosure may be, for example, a 46110 battery, a 4875 battery, a 48110 battery, a 4880 battery, and a 4680 battery. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collecting plate to the bending surface of the uncoated portion, it is necessary to sufficiently increase the number of overlapping layers of the uncoated portion in order to sufficiently secure the welding strength and lower the resistance. This requirement may be achieved by the electrode and the electrode assembly according to the embodiments (modifications) of the present disclosure.

A battery according to an embodiment of the present disclosure may be an approximately cylindrical battery, whose diameter is approximately 46 mm, height is approximately 110 mm, and form factor ratio is 0.418.

A battery according to another embodiment may be an approximately cylindrical battery, whose diameter is about 48 mm, height is about 75 mm, and form factor ratio is 0.640.

A battery according to still another embodiment may be an approximately cylindrical battery, whose diameter is approximately 48 mm, height is approximately 110 mm, and form factor ratio is 0.436.

A battery according to still another embodiment may be an approximately cylindrical battery, whose diameter is approximately 48 mm, height is approximately 80 mm, and form factor ratio is 0.600.

A battery according to still another embodiment may be an approximately cylindrical battery, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

Hereinafter, the cylindrical battery according to an embodiment of the present disclosure will be described in detail.

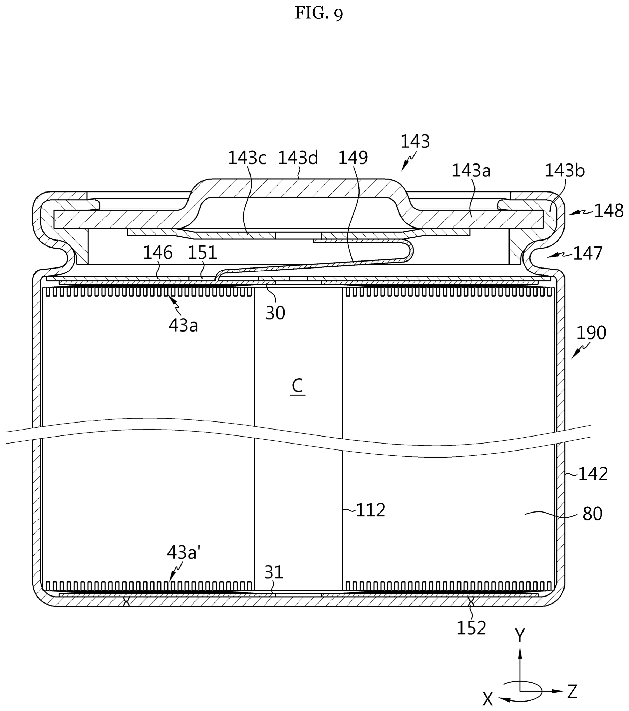

FIG. 9 is a cross-sectional view showing a cylindrical battery 190 according to an embodiment of the present disclosure, taken along the Y-axis direction.

Referring to FIG. 9, the cylindrical battery 190 according to an embodiment of the present disclosure includes an electrode assembly 80 having a first electrode, a separator and a second electrode, a battery housing 142 for accommodating the electrode assembly 80, and a sealing body 143 for sealing an open portion of the battery housing 142.

The battery housing 142 is a cylindrical container with an opening at the top. The battery housing 142 is made of a conductive metal material such as aluminum or steel. The battery housing 142 accommodates the electrode assembly 80 in the inner space through the top opening and also accommodates the electrolyte.

The electrolyte may be a salt having a structure like A+B-. Here, A+ includes an alkali metal cation such as Li+, Na+, or K+, or a combination thereof. and B-includes at least one anion selected from the group consisting of F-, Cl-, Br-, I-, NO3-, N(CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN- and (CF3CF2SO2)2N-.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The electrode assembly 80 may have a jelly-roll shape. The electrode assembly 80 may be manufactured by winding a stack formed by sequentially laminating a lower separator, a first electrode, an upper separator, and a second electrode at least once, based on the winding center C, as shown in FIG. 2.

The first electrode and the second electrode have different polarities. That is, if one has positive polarity, the other has negative polarity. At least one of the first electrode and the second electrode may have an electrode structure according to the above embodiments (modifications). In addition, the other of the first electrode and the second electrode may have a conventional electrode structure or an electrode structure according to embodiments (modifications).

The uncoated portion 43a of the first electrode and the uncoated portion 43a' of the second electrode protrude at the upper portion and the lower portion of the electrode assembly 80, respectively.

The sealing body 143 may include a cap plate 143a, a first gasket 143b for providing airtightness between the cap plate 143a and the battery housing 142 and having insulation, and a connection plate 143c electrically and mechanically coupled to the cap plate 143a.

The cap plate 143a is a component made of a conductive metal material, and covers the top opening of the battery housing 142. The cap plate 143a is electrically connected to the uncoated portion 43a of the first electrode, and is electrically insulated from the battery housing 142 by means of the first gasket 143b. Accordingly, the cap plate 143a may function as the first electrode of the cylindrical battery 190.

The cap plate 143a is placed on the beading portion 147 formed on the battery housing 142, and is fixed by a crimping portion 148. Between the cap plate 143a and the crimping portion 148, the first gasket 143b may be interposed to secure the airtightness of the battery housing 142 and the electrical insulation between the battery housing 142 and the cap plate 143a. The cap plate 143a may have a protrusion 143d protruding upward from the center thereof.

The battery housing 142 is electrically connected to the uncoated portion 43a' of the second electrode. Therefore, the battery housing 142 has the same polarity as the second electrode. If the second electrode has negative polarity, the battery housing 142 also has negative polarity.

The battery housing 142 includes the beading portion 147 and the crimping portion 148 at the top thereof. The beading portion 147 is formed by press-fitting the periphery of the outer circumferential surface of the battery housing 142. The beading portion 147 prevents the electrode assembly 80 accommodated inside the battery housing 142 from escaping through the top opening of the battery housing 142, and may function as a support portion on which the sealing body 143 is placed.

The crimping portion 148 is formed on the beading portion 147. The crimping portion 148 has an extended and bent shape to cover the outer circumference of the cap plate 143a disposed on the beading portion 147 and a part of the upper surface of the cap plate 143a.

The cylindrical battery 190 may further include a first current collecting plate 30 and/or a second current collecting plate 31 and/or an insulator 146.

The first current collecting plate 30 is coupled to the upper portion of the electrode assembly 80. The first current collecting plate 30 is made of a conductive metal material such as aluminum, copper, nickel and so on, and is electrically connected to the bending surface formed by bending the uncoated portion 43a of the first electrode. A lead 149 may be connected to the first current collecting plate 30. The lead 149 may extend upward above the electrode assembly 80 and be coupled to the connection plate 143c or directly coupled to the lower surface of the cap plate 143a. The lead 149 may be connected to other components by welding.

Preferably, the first current collecting plate 30 may be integrally formed with the lead 149. In this case, the lead 149 may have an elongated plate shape extending outward from the center of the first current collecting plate 30.

The first current collecting plate 30 and the bending surface of the uncoated portion 43a may be coupled by, for example, laser welding. Laser welding may be performed by partially melting a base material of the current collecting plate. The laser welding may be replaced with resistance welding, ultrasonic welding, or the like.

At least a part of the welding region of the first current collecting plate 30 may overlap with a region (first region) in which the number of overlapping layers of the uncoated portion 43a is 10 or more in the bending surface of the uncoated portion 43a.

Preferably, at least a part of the welding region of the first current collecting plate 30 may overlap with a region (second region) in which the number of overlapping layers of the uncoated portion 43a is 10 or more and is kept constant as the criterion layer number along the radial direction in the bending surface of the uncoated portion 43a.

The radial region corresponding to the second region is 25% or more based on the radius of the electrode assembly. The criterion layer number corresponds to a maximum value of the number of overlapping layers of the uncoated portion 43a. The overlapping ratio between the welding region and the second region may be at least 50% or more.

The second current collecting plate 31 may be coupled to the lower surface of the electrode assembly 80. One side of the second current collecting plate 31 may be coupled by welding to the bending surface formed by bending the uncoated portion 43a' of the second electrode, and the other side may be coupled to the inner bottom surface of the battery housing 142 by welding. The coupling structure between the second current collecting plate 31 and the uncoated portion 43a' of the second electrode may be substantially the same as the coupling structure between the first current collecting plate 30 and the uncoated portion 43a of the first electrode.

The insulator 146 may cover the first current collecting plate 30. The insulator 146 may cover the first current collecting plate 30 at the upper surface of the first current collecting plate 30, thereby preventing direct contact between the first current collecting plate 30 and the inner circumference of the battery housing 142.

The insulator 146 has a lead hole 151 so that the lead 149 extending upward from the first current collecting plate 30 may be withdrawn therethrough. The lead 149 is drawn upward through the lead hole 151 and coupled to the lower surface of the connection plate 143c or the lower surface of the cap plate 143a.

A peripheral region of the edge of the insulator 146 may be interposed between the first current collecting plate 30 and the beading portion 147 to fix the coupled body of the electrode assembly 110 and the first current collecting plate 30. Accordingly, the movement of the coupled body of the electrode assembly 80 and the first current collecting plate 30 may be restricted in the height direction of the battery 190, thereby improving the assembly stability of the battery 190.

The insulator 146 may be made of an insulating polymer resin. In one example, the insulator 146 may be made of polyethylene, polypropylene, polyimide, or polybutylene terephthalate.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 190 and the internal pressure increases to a predetermined level or more, the venting portion 152 may be ruptured so that the gas generated inside the battery housing 142 is discharged to the outside.

The venting portion 152 may be formed continuously or discontinuously while drawing a circle at the lower surface of the battery housing 142. In one modification, the venting portion 152 may be formed in a straight pattern or other patterns.

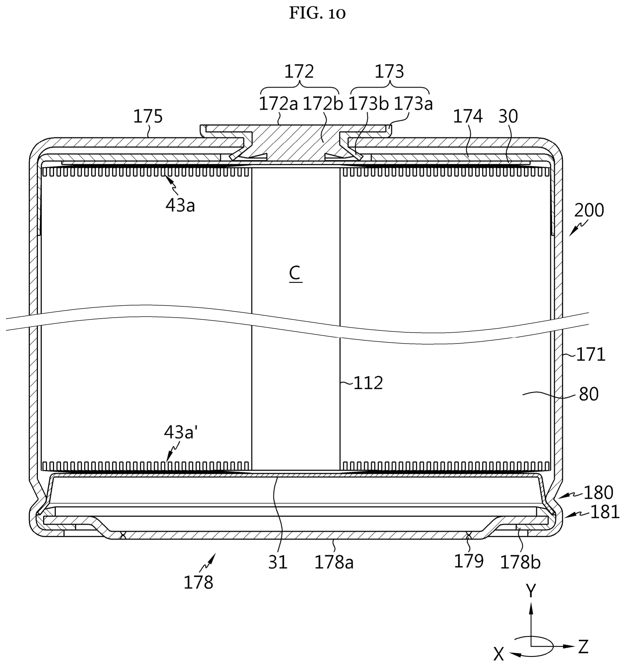

FIG. 10 is a cross-sectional view showing a cylindrical battery 200 according to still another embodiment of the present disclosure, taken along the Y-axis direction.

Referring to FIG. 10, the structure of the electrode assembly of the cylindrical battery 80 is substantially the same as that of the cylindrical battery 190 of in FIG. 9, and the other structure except for the electrode assembly is changed.

Specifically, the cylindrical battery 200 includes a battery housing 171 through which a rivet terminal 172 is installed. The rivet terminal 172 is installed on the closed surface (the upper surface in the drawing) of the battery housing 171. The rivet terminal 172 is riveted to the perforation hole of the battery housing 171 in a state where a second gasket 173 having an insulating property is interposed therebetween. The rivet terminal 172 is exposed to the outside in a direction opposite to the direction of gravity.

The rivet terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed surface of the battery housing 171. The maximum diameter of the terminal exposing portion 172a may be larger than the maximum diameter of the perforation hole formed in the battery housing 171. The terminal insert portion 172b may be electrically connected to the uncoated portion 43a of the first electrode through approximately the central portion of the closed surface of the battery housing 171. The terminal insert portion 172b may be riveted onto the inner surface of the battery housing 171. That is, an end of the terminal insert portion 172b may have a shape curved toward the inner surface of the battery housing 171. The maximum diameter of the end of the terminal insert portion 172b may be larger than the maximum diameter of the perforation hole of the battery housing 171.

The bottom surface of the terminal insert portion 172b is substantially flat and may be welded to the first current collecting plate 30 connected to the uncoated portion 43a of the first electrode. An insulator 174 made of an insulating material may be interposed between the first current collecting plate 30 and the inner surface of the battery housing 171. The insulator 174 covers the upper portion of the first current collecting plate 144 and the top edge of the electrode assembly 80. Accordingly, it is possible to prevent the outer circumference side uncoated portion of the electrode assembly 80 from contacting the inner surface of the battery housing 171 having a different polarity to cause a short circuit.

The terminal insert portion 172b of the terminal 172 may be laser-welded to the first current collecting plate 30 through the insulator 174. The laser welding may be replaced with ultrasonic welding, resistance welding, or the like.

At least a part of the welding region of the first current collecting plate 30 may overlap with a region (first region) in which the number of overlapping layers of the uncoated portion 43a is 10 or more in the bending surface of the uncoated portion 43a.

Preferably, at least a part of the welding region of the first current collecting plate 30 may overlap with a region (second region) in which the number of overlapping layers of the uncoated portion 43a is 10 or more and is kept constant as the criterion layer number along the radial direction in the bending surface of the uncoated portion 43a.

The radial region corresponding to the second region is 25% or more based on the radius of the electrode assembly. The criterion layer number corresponds to a maximum value of the number of overlapping layers of the uncoated portion 43a. The overlapping ratio between the welding region and the second region may be at least 50% or more.

The second gasket 173 is interposed between the battery housing 171 and the rivet terminal 172 to prevent the battery housing 171 and the rivet terminal 172 having opposite polarities from electrically contacting each other. Accordingly, the upper surface of the battery housing 171 having an approximately flat shape may function as the second electrode terminal of the cylindrical battery 200.

The second gasket 173 includes a gasket exposing portion 173a and a gasket insert portion 173b. The gasket exposing portion 173a is interposed between the rivet terminal exposing portion 172a of the terminal 172 and the battery housing 171. The gasket insert portion 173b is interposed between the terminal insert portion 172b of the rivet terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation property.

The gasket exposing portion 173a of the second gasket 173 may have an extended shape to cover the outer circumference of the terminal exposing portion 172a of the rivet terminal 172. When the second gasket 173 covers the outer circumference of the rivet terminal 172, it is possible to prevent a short circuit from occurring while an electrical connection part such as a bus bar is coupled to the upper surface of the battery housing 171 and/or the rivet terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the rivet terminal 172 by thermal fusion. In this case, airtightness at the coupling interface between the second gasket 173 and the rivet terminal 172 and at the coupling interface between the second gasket 173 and the battery housing 171 may be enhanced. Meanwhile, when the gasket exposing portion 173a of the second gasket 173 has a shape extending to the upper surface of the terminal exposing portion 172a, the rivet terminal 172 may be integrally coupled with the second gasket 173 by insert injection.

In the upper surface of the battery housing 171, a remaining area 175 other than the area occupied by the rivet terminal 172 and the second gasket 173 corresponds to the second electrode terminal having a polarity opposite to that of the rivet terminal 172.

The second current collecting plate 31 is coupled to the lower portion of the electrode assembly 80. The second current collecting plate 31 is made of a conductive metal material such as aluminum, steel, copper or nickel, and is electrically connected to the uncoated portion 43a' of the second electrode.

Preferably, the second current collecting plate 31 is electrically connected to the battery housing 171. To this end, at least a portion of the edge of the second current collecting plate 31 may be interposed and fixed between the inner surface of the battery housing 171 and a first gasket 178b. In one example, at least a portion of the edge of the second current collecting plate 31 may be fixed to the beading portion 180 by welding in a state of being supported on the lower surface of the beading portion 180 formed at the bottom of the battery housing 171. In one modification, at least a portion of the edge of the second current collecting plate 31 may be directly welded to the inner wall surface of the battery housing 171.

Preferably, the second current collecting plate 31 and the bending surface of the uncoated portion 43a' may be coupled by, for example, laser welding. The laser welding may be replaced with ultrasonic welding, resistance welding, or the like.

At least a part of the welding region of the second current collecting plate 31 may overlap with a region (first region) in which the number of overlapping layers of the uncoated portion 43a' is 10 or more in the bending surface of the uncoated portion 43a'.

Preferably, at least a part of the welding region of the second current collecting plate 31 may overlap with a region (second region) in which the number of overlapping layers of the uncoated portion 43a' is 10 or more and is kept constant as the criterion layer number along the radial direction in the bending surface of the uncoated portion 43a'.

The radial region corresponding to the second region is 25% or more based on the radius of the electrode assembly. The criterion layer number corresponds to a maximum value of the number of overlapping layers of the uncoated portion 43a'. The overlapping ratio between the welding region and the second region may be at least 50% or more.

A sealing body 178 for sealing the lower open end of the battery housing 171 includes a cap plate 178a and a first gasket 178b. The first gasket 178b electrically separates the cap plate 178a and the battery housing 171. A crimping portion 181 fixes the edge of the cap plate 178a and the first gasket 178b together. The cap plate 178a has a venting portion 179. The configuration of the venting portion 179 is substantially the same as the above embodiment (modification).

Preferably, the cap plate 178a is made of a conductive metal material. However, since the first gasket 178b is interposed between the cap plate 178a and the battery housing 171, the cap plate 178a does not have electrical polarity. The sealing body 178 seals the open end of the lower portion of the battery housing 171 and mainly functions to discharge gas when the internal pressure of the battery 200 increases over a critical value.

Preferably, the rivet terminal 172 electrically connected to the uncoated portion 43a of the first electrode is used as the first electrode terminal. In addition, in the upper surface of the battery housing 171 electrically connected to the uncoated portion 43a of the second electrode through the second current collecting plate 31, a part 175 except for the rivet terminal 172 is used as the second electrode terminal having a different polarity from the first electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the second electrode terminal has an approximately flat shape, a sufficient bonding area may be secured for bonding electrical connection components such as bus bars. Accordingly, the cylindrical battery 200 may reduce the resistance at the bonding portion of the electrical connection components to a desirable level.

In the present disclosure, even if the uncoated portions 43a, 43a' are bent toward the core, the cavity 112 of the core C of the electrode assembly 80 may be opened upward without being blocked.

Even if the uncoated portion near the core of the electrode assembly 80 is bent, since the height of the uncoated portion 43a, 43a', especially the height of the core side uncoated portion, is designed to be low for each relative radial position according to the winding turn index of the first and second electrodes, the cavity 112 in the core of the electrode assembly 80 is not blocked.

If the cavity 112 is not blocked, there is no difficulty in the electrolyte injection process, and the electrolyte injection efficiency is improved. In addition, by inserting a welding jig through the cavity 112, the welding process may be easily performed between the current collecting plate 31 of FIG. 9 and the bottom of the battery housing 142 and between the current collecting plate 30 of FIG. 10 and the rivet electrode 172.

In the case where the uncoated portions 43a, 43a' have a segment structure, if the width and/or height and/or separation pitch of the segments is adjusted to satisfy the numerical range of the above embodiment, when the segments are bent, the segments are overlapped in several layers enough to secure sufficient welding strength, and an empty hole (gap) is not formed on the bending surface.

The cylindrical battery according to the above embodiments (modifications) may be used to manufacture a battery pack.

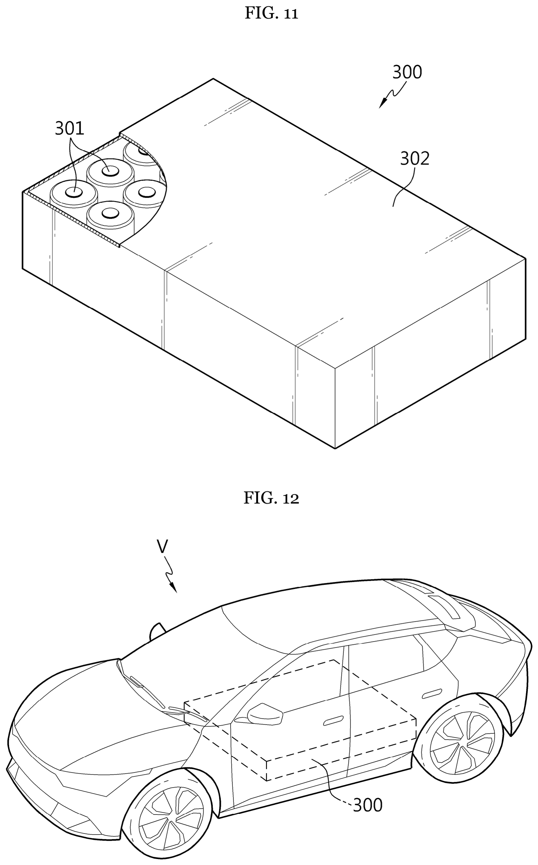

FIG. 11 is a diagram schematically showing a battery pack according to an embodiment of the present disclosure.

Referring to FIG. 11, a battery pack 300 according to an embodiment of the present disclosure includes an aggregate in which cylindrical batteries 301 are electrically connected, and a pack housing 302 for accommodating the aggregate. The cylindrical battery 301 may be any one of the batteries 190, 200 according to the above embodiments (modifications). In the drawing, components such as a bus bar for electrical connection of the cylindrical batteries 301, a cooling unit, an external terminal, and so on are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 12 is a diagram schematically showing a vehicle including the battery pack 300 of FIG. 11.

Referring to FIG. 12, a vehicle V according to an embodiment of the present disclosure includes the battery pack 300 according to an embodiment of the present disclosure. The vehicle V operates by receiving power from the battery pack 300 according to an embodiment of the present disclosure.

According to one aspect of the present disclosure, when bending the uncoated portions exposed at both ends of the electrode assembly, even if the welding output is increased, damage to the separator or the active material layer may be prevented by sufficiently securing a region in which the uncoated portions are overlapped into 10 or more layers in the radial direction of the electrode assembly.

According to still another aspect of the present disclosure, the structure of the uncoated portion adjacent to the core of the electrode assembly may be improved to prevent the cavity in the core of the electrode assembly from being blocked when the uncoated portions are bent, so that the electrolyte injection process and the welding process for the battery housing and the current collecting plate may be easily performed.

According to still another aspect of the present disclosure, an electrode assembly with improved energy density and reduced resistance may be provided by directly welding the bending surface of the uncoated portion to the current collecting plate instead of an electrode tab in a strip form.

According to still another aspect of the present disclosure, a cylindrical battery having a structure with low internal resistance and improved welding strength between the current collecting plate and the uncoated portion, and a battery pack and a vehicle including the cylindrical battery may be provided.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.
In view of the foregoing disclosure, the present invention may be implemented in accordance with the following itemized embodiment examples.
Item 1. An electrode assembly in which a first electrode, a second electrode, and a separator interposed therebetween are wound based on one axis to define a core and an outer circumference,
   wherein at least one of the first electrode and the second electrode includes an uncoated portion at a long side end,
   at least a part of the uncoated portion is exposed to the outside of the separator along a longitudinal direction of the electrode assembly,
   at least a part of the uncoated portion is bent in a radial direction of the electrode assembly to form a bending surface, and
   in the bending surface, a first region in which the number of overlapping layers of the uncoated portion is equal to or greater than a minimum layer number extends along the radial direction
   (assuming that the total number of winding turns of the electrode including the uncoated portion is nᵢ (when i is 1, it is a factor for the first electrode, and when i is 2, it is a factor for the second electrode, i.e., n1 means the total number of winding turns of the first electrode, and n2 means the total number of winding turns of the second electrode), a value obtained by dividing the winding turn index k (a natural number of 1 to nᵢ) at a k^{th} winding turn position by the total number of winding turns nᵢ is defined as a relative radial position R_{i,k} for the winding turn index k).
Item 2. The electrode assembly according to Item 1,
   wherein the bending surface is formed by bending the uncoated portion based on a predetermined bending point (D4).
Item 3. The electrode assembly according to Item 1,
   wherein the minimum layer number is 10.
Item 4. The electrode assembly according to Item 1,
   wherein the bending surface includes a second region in which the number of overlapping layers of the uncoated portion is kept constant as a criterion layer number along the radial direction, and
   the second region is included in the first region.
Item 5. The electrode assembly according to Item 4,
   wherein the criterion layer number is equal to or greater than the minimum layer number.
Item 6. The electrode assembly according to Item 4,
   wherein the first region includes a first variable region in which the number of overlapping layers gradually increases in the radial direction and a second variable region in which the number of overlapping layers gradually decreases in the radial direction.
Item 7. The electrode assembly according to Item 6,
   wherein the second region exists between the first variable region and the second variable region.
Item 8. An electrode assembly in which a first electrode, a second electrode, and a separator interposed therebetween are wound based on one axis to define a core and an outer circumference,
   wherein at least one of the first electrode and the second electrode includes an uncoated portion at a long side end,
   at least a part of the uncoated portion is exposed to the outside of the separator along a longitudinal direction of the electrode assembly,
   at least a part of the uncoated portion is bent in a radial direction of the electrode assembly to form a bending surface,
   the bending surface includes a second region in which the number of overlapping layers of the uncoated portion is substantially kept constant as a criterion layer number along the radial direction
   (assuming that the total number of winding turns of the electrode including the uncoated portion is nᵢ (when i is 1, it is a factor for the first electrode, and when i is 2, it is a factor for the second electrode, i.e., n1 means the total number of winding turns of the first electrode, n2 means the total number of winding turns of the second electrode), a value obtained by dividing the winding turn index k (a natural number of 1 to nᵢ) at a k^{th} winding turn position by the total number of winding turns nᵢ is defined as a relative radial position R_{i,k} for the winding turn index k).
Item 9. The electrode assembly according to Item 8,
   wherein the criterion layer number is 10 or more.
Item 10. The electrode assembly according to any one of Items 4 to 9,
   wherein a ratio of a length of a radial region of R_{i,k} satisfying the condition that the number of overlapping layers of the uncoated portion is the criterion layer number is at least 25% or more compared to the radius of the electrode assembly.
Item 11. The electrode assembly according to any one of Items 1 to 9,
   wherein the thickness of the first and second electrodes is 80 um to 250 um, and
   the interval between uncoated portions located in winding turns adjacent in the radial direction of the electrode assembly is 200 um to 500 um.
Item 12. The electrode assembly according to any one of Items 1 to 9,
   wherein in the winding structure of the electrode including the uncoated portion, the height of the uncoated portion in a region from a relative radial position R_{i,1} of the first winding turn to a first relative radial position R_{i,k*} of a preset k*^{th} winding turn is smaller than the height of the uncoated portion in a region from a relative radial position R_{i,k*+1} of a k*+1^{th} winding turn to a relative radial position R_{i,last}
   (where R_{i,last} is a relative radial position of an outermost winding turn, which is located outer than R_{i,k*+1} and where the bent uncoated portion is located).
Item 13. The electrode assembly according to Item 12,
   wherein the relative radial position R_{i,last} is 1.
Item 14. The electrode assembly according to Item 12,
   wherein the relative radial position R_{i,last} is R_{i,ni-p}, and p is the number of winding turns without an uncoated portion forming the bending surface, including the outermost winding turn.
Item 15. The electrode assembly according to any one of Items 1 to 9,
   wherein in the winding structure of the electrode including the uncoated portion, the uncoated portion in a region from a relative radial position R_{i,1} of the first winding turn to a first relative radial position R_{i,k*} of a preset k*^{th} winding turn has a lower height than the bending surface formed by overlapping the bent uncoated portions.
Item 16. The electrode assembly according to Item 12,
   wherein in the winding structure of the electrode including the uncoated portion, the uncoated portion in the region from the relative radial position R_{i,1} of the first winding turn to the first relative radial position R_{i,k*} of the preset k*^{th} winding turn has a lower height than the bending surface formed by overlapping the bent uncoated portions.
Item 17. The electrode assembly according to any one of Items 1 to 9,
   wherein in the winding structure of the electrode including the uncoated portion, the uncoated portion in a region from a relative radial position R_{i,1} of the first winding turn to a first relative radial position R_{i,k*} of a preset k*^{th} winding turn is not bent toward the core of the electrode assembly.
Item 18. The electrode assembly according to Item 12,
   wherein in the winding structure of the electrode including the uncoated portion, the uncoated portion in the region from the relative radial position R_{i,1} of the first winding turn to the first relative radial position R_{i,k*} of the preset k*^{th} winding turn is not bent toward the core of the electrode assembly.
Item 19. The electrode assembly according to any one of Items 1 to 9,
   wherein the bent portion of the uncoated portion of the first electrode or the second electrode is divided into a plurality of segments.
Item 20. The electrode assembly according to Item 19,
   wherein each of the plurality of segments has a rectangular, trapezoidal, triangular, parallelogram, semi-circular or semi-elliptical shape.
Item 21. The electrode assembly according to Item 19,
   wherein each of the plurality of segments has a trapezoidal shape, and a lower internal angle of the trapezoidal shape of the plurality of segments increases individually or in groups from the core toward the outer circumference.
Item 22. The electrode assembly according to Item 12, 15 or 17,
   wherein in the winding structure of the electrode including the uncoated portion, a bending length fd_{i,k*+1} of the uncoated portion at the relative radial position R_{i,k*+1} of the k*+1^{th} winding turn is equal to or shorter than a radial length from the relative radial position R_{i,1} of the first winding turn to the k*^{th} relative radial position R_{i,k*}.
Item 23. The electrode assembly according to Item 12, 15 or 17,
   wherein in the winding structure of the electrode including the uncoated portion, a cavity in the core of the electrode assembly is not closed by the bent portion of the uncoated portion located in a region of the relative radial position R_{i,k*+1} of the k*+1^{th} winding turn to R_{i,last}
   (where R_{i,last} is a relative radial position of an outermost winding turn, which is located outer than R_{i,k*+1} and where the bent uncoated portion is located).
Item 24. The electrode assembly according to Item 12, 15 or 17,
   wherein in the winding structure of the electrode including the uncoated portion, the uncoated portion in a region from the relative radial position R_{i,k*+1} of the k*+1^{th} winding turn to a second relative radial position R_{i,k@} of a preset k@^{th} winding turn is divided into a plurality of segments, whose heights increase stepwise or gradually toward the outer circumference.
Item 25. The electrode assembly according to Item 24,
   wherein in the winding structure of the electrode including the uncoated portion, the uncoated portion of the first electrode from a relative radial position R_{i,k@+1} of a preset k@+1^{th} winding turn to the relative radial position R_{i,last} is divided into a plurality of segments, and heights of the plurality of segments are substantially the same from the relative radial position R_{i,k@+1} to the relative radial position R_{i,last}
   (where R_{i,last} is a relative radial position of an outermost winding turn, which is located outer than R_{i,k*+1} and where the bent uncoated portion is located).
Item 26. The electrode assembly according to Item 25,
   wherein the relative radial position R_{i,last} is 1.
Item 27. The electrode assembly according to Item 25,
   wherein the relative radial position R_{i,last} is R_{i,ni-p}, and p is the number of winding turns without an uncoated portion forming the bending surface, including the outermost winding turn.
Item 28. The electrode assembly according to any one of Items 1 to 9,
   wherein in the winding structure of the electrode including the uncoated portion, the uncoated portion bent toward the core is divided into a plurality of segments, and at least one of a height in a winding axis direction and a width in a winding direction of the plurality of segments increases stepwise from the core toward the outer circumference individually or in groups.
Item 29. The electrode assembly according to Item 19,
   wherein when the bent portion of the uncoated portion is divided into a plurality of segments, each of the plurality of segments satisfies at least one condition among a width condition of 1 mm to 11 mm in a winding direction;
   a height condition of 2 mm to 10 mm in a winding axis direction; and a separation pitch condition of 0.05 mm to 1 mm in the winding direction.
Item 30. The electrode assembly according to Item 19,
   wherein a predetermined gap is provided between a bottom (D4) of a cut groove of the segment and an active material layer.
Item 31. The electrode assembly according to Item 19,
   wherein an insulating coating layer is formed at a boundary region between the uncoated portion and an active material layer, and
   a predetermined gap is provided between a bottom (D4) of a cut groove of the segment and the insulating coating layer.
Item 32. The electrode assembly according to Item 30 or 31,
   wherein the gap is 0.2 mm to 4 mm.
Item 33. The electrode assembly according to Item 19,
   wherein when the bent portion of the uncoated portion is divided into a plurality of segments, the plurality of segments form a plurality of segment groups from the core toward the outer circumference, and segments belonging to the same segment group are the same as each other in terms of at least one element of a width in a winding direction, a height in a winding axis direction, and a separation pitch in the winding direction.
Item 34. The electrode assembly according to Item 33,
   wherein the at least one element identical in the segments belonging to the same segment group increases stepwise from the core toward the outer circumference.
Item 35. The electrode assembly according to Item 33,
   wherein at least a part of the plurality of segment groups are disposed in the same winding turn of the electrode assembly.
Item 36. The electrode assembly according to Item 33,
   wherein the same winding turn belongs to any one segment group.
Item 37. The electrode assembly according to Item 33,
   wherein the segments belonging to the same segment group constitute a part or all of the same winding turn and a part of a winding turn adjacent thereto.
Item 38. The electrode assembly according to Item 33,
   wherein the segments belonging to the same segment group constitute all of the same winding turn, a part or all of a winding turn adjacent thereto toward the core, and a part or all of a winding turn adjacent thereto toward the outer circumference.
Item 39. A battery, comprising:
   an electrode assembly in which a first electrode, a second electrode, and a separator interposed therebetween are wound based on one axis to define a core and an outer circumference, wherein at least one of the first electrode and the second electrode includes an uncoated portion provided at a long side end and exposed to the outside of the separator along a longitudinal direction of the electrode assembly, at least a part of the uncoated portion is bent in a radial direction of the electrode assembly to form a bending surface, and the bending surface includes a region in which the number of overlapping layers of the uncoated portion is kept constant as a criterion layer number along the radial direction;
   a battery housing configured to accommodate the electrode assembly and electrically connected to one of the first electrode and the second electrode to have a first polarity;
   a sealing body configured to seal an open end of the battery housing;
   a terminal having a surface exposed to the outside and electrically connected to the other of the first electrode and the second electrode to have a second polarity; and
   a current collecting plate welded to overlap at least a part of the region and electrically connected to any one of the battery housing and the terminal.
Item 40. The battery according to Item 39,
   wherein assuming that the total number of winding turns of the electrode including the uncoated portion is nᵢ (when i is 1, it is a factor for the first electrode, and when i is 2, it is a factor for the second electrode), when a value obtained by dividing the winding turn index k (a natural number of 1 to nᵢ) at a k^{th} winding turn position by the total number of winding turns nᵢ is defined as a relative radial position R_{i,k} for the winding turn index k, a ratio of a length of the radial region of R_{i,k} satisfying the condition that the number of overlapping layers of the uncoated portion is 10 or more is at least 25% or more compared to the radius of the electrode assembly.
Item 41. The battery according to Item 39,
   wherein the region and the welding region of the current collecting plate overlap by 50% or more.
Item 42. A battery pack, comprising the battery according to any one of Items 39 to 41.
Item 43. A vehicle, comprising the battery pack according to Item 42.

## Claims

1. An electrode assembly (80) in which a first electrode (40), a second electrode (40'), and a separator interposed therebetween are wound based on one axis to define a core and an outer circumference,
wherein at least one of the first electrode (40) and the second electrode (40') includes an uncoated portion (43a, 43a') at a long side end,
at least a part of the uncoated portion (43a, 43a') is exposed to the outside of the separator along a longitudinal direction of the electrode assembly (80),
at least a part of the uncoated portion (43a, 43a') is bent in a radial direction of the electrode assembly (80) to form a bending surface,
the bending surface includes a region in which the number of overlapping layers of the uncoated portion (43a, 43a') is substantially kept constant as a criterion layer number of 10 or more along the radial direction, and
a part of the uncoated portion (43a, 43a') located in at least one winding turn including the last winding turn has a lower height than the at least a part of the uncoated portion (43a, 43a') bent in the radial direction of the electrode assembly (80) to form the bending surface and is not bent in the radial direction of the electrode assembly (80).

2. The electrode assembly (80) according to claim 1,
assuming that the total number of winding turns of the electrode including the uncoated portion (43a, 43a') is nᵢ, wherein when i is 1, it is a factor for the first electrode (40), and when i is 2, it is a factor for the second electrode (40'), i.e., n1 means the total number of winding turns of the first electrode (40), n2 means the total number of winding turns of the second electrode (40'), a value obtained by dividing the winding turn index k , wherein k is a natural number of 1 to nᵢ, at a k^{th} winding turn position by the total number of winding turns nᵢ is defined as a relative radial position R_{i,k} for the winding turn index k, wherein a ratio of a length of a radial region of R_{i,k} satisfying the condition that the number of overlapping layers of the uncoated portion (43a, 43a') is substantially kept constant as the criterion layer number of 10 or more is at least 25% or more compared to the radius of the electrode assembly (80).

3. The electrode assembly (80) according to claim 2,
wherein in the winding structure of the electrode including the uncoated portion (43a, 43a'), the height of the uncoated portion (43a, 43a') in a region from a relative radial position R_{i,1} of the first winding turn to a first relative radial position R_{i,k*} of a preset k*^{th} winding turn is smaller than the height of the uncoated portion (43a, 43a') in a region from a relative radial position R_{i,k*+1} of a k*+1^{th} winding turn to a relative radial position R_{i,last},
where R_{i,last} is a relative radial position of an outermost winding turn, which is located outer than R_{i,k*+1} and where the bent uncoated portion (43a, 43a') is located.

4. The electrode assembly (80) according to claim 3,
wherein the relative radial position R_{i,last} is 1, or
wherein the relative radial position R_{i,last} is R_{i,ni-p}, and p is the number of winding turns without an uncoated portion (43a, 43a') forming the bending surface, including the outermost winding turn.

5. The electrode assembly (80) according to claim 2,
wherein in the winding structure of the electrode including the uncoated portion (43a, 43a'), the uncoated portion (43a, 43a') in a region from a relative radial position R_{i,1} of the first winding turn to a first relative radial position R_{i,k*} of a preset k*^{th} winding turn has a lower height than the bending surface formed by overlapping the bent uncoated portion (43a, 43a')s.

6. The electrode assembly (80) according to claim 2,
wherein in the winding structure of the electrode including the uncoated portion (43a, 43a'), the uncoated portion (43a, 43a') in a region from a relative radial position R_{i,1} of the first winding turn to a first relative radial position R_{i,k*} of a preset k*^{th} winding turn is not bent toward the core of the electrode assembly (80).

7. The electrode assembly (80) according to claim 1,
wherein the bent portion of the uncoated portion (43a, 43a') of the first electrode (40) or the second electrode (40') is divided into a plurality of segments (61), and
wherein each of the plurality of segments (61) has a rectangular, trapezoidal, triangular, parallelogram, semi-circular or semi-elliptical shape.

8. The electrode assembly (80) according to claim 2,
wherein in the winding structure of the electrode including the uncoated portion (43a, 43a'), a cavity in the core of the electrode assembly (80) is not closed by the bent portion of the uncoated portion (43a, 43a') located in a region of the relative radial position R_{i,k*+1} of the k*+1^{th} winding turn to R_{i,last} ,
where R_{i,last} is a relative radial position of an outermost winding turn, which is located outer than R_{i,k*+1} and where the bent uncoated portion (43a, 43a') is located.

9. The electrode assembly (80) according to claim 2,
wherein in the winding structure of the electrode including the uncoated portion (43a, 43a'), the uncoated portion (43a, 43a') in a region from the relative radial position R_{i,k*+1} of the k*+1^{th} winding turn to a second relative radial position R_{i,k@} of a preset k@^{th} winding turn is divided into a plurality of segments (61), whose heights increase stepwise or gradually toward the outer circumference.

10. The electrode assembly (80) according to claim 1,
wherein in the winding structure of the electrode including the uncoated portion (43a, 43a'), the uncoated portion (43a, 43a') bent toward the core is divided into a plurality of segments (61), and at least one of a height in a winding axis direction (Y) and a width in a winding direction (X) of the plurality of segments (61) increases stepwise from the core toward the outer circumference individually or in groups.

11. The electrode assembly (80) according to claim 1,
wherein in the winding structure of the electrode including the uncoated portion (43a, 43a'), the uncoated portion (43a, 43a') bent toward the core is divided into a plurality of segments (61),
wherein a predetermined gap is provided between a bottom (D4) of a cut groove of the segment and an active material layer, and
wherein an insulating coating layer is formed at a boundary region between the uncoated portion (43a, 43a') and the active material layer, and
wherein a predetermined gap is provided between a bottom (D4) of a cut groove of the segment and the insulating coating layer.

12. A battery, comprising:
an electrode assembly (80) according to any one of previous claims;
a battery housing (142, 171) configured to accommodate the electrode assembly (80) and electrically connected to one of the first electrode (40) and the second electrode (40') to have a first polarity;
a sealing body (143) configured to seal an open end of the battery housing (142, 171);
a terminal (172) having a surface exposed to the outside and electrically connected to the other of the first electrode (40) and the second electrode (40') to have a second polarity; and
a current collecting plate welded to overlap at least a part of the region and electrically connected to any one of the battery housing (142, 172) and the terminal (172).

13. The battery according to claim 12,
wherein the region and the welding region of the current collecting plate overlap by 50% or more.

14. A battery pack (300), comprising the battery according to any one of claims 12 and 13.

15. A vehicle (V), comprising the battery pack (300) according to claim 14.
